# EUROPÄISCHE PATENTSCHRIFT

(11) **EP 1 820 754 B1**
(45) Veröffentlichungstag und Bekanntmachung des Hinweises auf die Patenterteilung: **10.04.2013**
(21) Anmeldenummer: 07003017.6
(22) Anmeldetag: 13.02.2007
(51) Int. Cl.: B65G 1/04, B65G 1/10

(54) **Regalsystem und Verfahren zur automatisierten Lagerung von Kleinstückgut**
Shelving system and method for automatic storage of smalls
Système d'étagère et procédé de stockage automatisé de petits objets

(30) Priorität: 15.02.2006 DE 102006007359
(43) Veröffentlichungstag der Anmeldung: 22.08.2007
(62) Teilanmeldung aus: 07021499.4
(73) Patentinhaber: Gollmann Kommissioniersysteme GmbH, 06112 Halle (DE)
(72) Erfinder: Gollmann, Daniel, 06114 Halle/Saale (DE)
(74) Vertreter: Steiniger, Carmen

(56) Entgegenhaltungen:
- WO-A-92/04713
- DE-A1- 3 604 890
- DE-U1- 20 122 458
- GB-A- 1 179 786
- JP-A- 3 259 803
- JP-A- 5 043 018
- JP-A- 53 034 278
- JP-A- 54 140 371
- JP-A- 56 003 205

## Beschreibung

Die vorliegende Erfindung betrifft ein Regalsystem zur automatisierten Lagerung von Kleinstückgut, mit mehreren Schranksegmenten und einer Stückguttransportvorrichtung, mit welcher das Kleinstückgut in den Schranksegmenten ablegbar und aus den Schranksegmenten entnehmbar ist, wobei die Stückguttransportvorrichtung über eine elektromotorisch angetriebene Horizontal- und Vertikalführung vor wenigstens einem der Schranksegmente positionierbar ist. Die Erfindung betrifft ferner ein Verfahren zur automatisierten Lagerung von Kleinstückgut, mit einem Regalsystem mit mehreren Schranksegmenten, wobei das Kleinstückgut mit einer Stückguttransportvorrichtung in den Schranksegmenten abgelegt und aus den Schranksegmenten entnommen wird, und wobei die Stückguttransportvorrichtung über eine elektromotorisch angetriebene Horizontal- und Vertikalführung vor wenigstens einem der Schranksegmente positioniert wird.

Der Lagerung von Kleinstückgut wie beispielsweise Medikamenten in konfektionierter Form wird gemäß dem Stand der Technik, insbesondere mit dem Fortschritt in der Automatisierungstechnik, zunehmend Bedeutung beigemessen.

Eine rechnergesteuerte Lösung hierfür bietet die in der Druckschrift DE 201 22 458 U1 beschriebene Vorrichtung. Hier ist eine mittig zwischen zwei Regalen automatisch ansteuerbare Vorrichtung zur Entnahme von Medikamentenverpackungen aus einem Vorratsregal und zur Auslagerung in eine gegenüberliegende Auslagerungsvorrichtung beschrieben. Prinzipiell können auf diese Weise auch mehrere Regale bedient werden, was jedoch den konstruktiven Aufwand zur Installierung weiterer Auslagerungsvorrichtungen erhöht. Eine vorder- und rückseitige Regalbedienbarkeit mit einer Auslagerungsvorrichtung ist mit der beschriebenen Anordnung nicht möglich.

In der Druckschrift DE 103 00 164 A1 werden ein Verfahren und eine Vorrichtung zum Konfektionieren von Stückgutartikeln, insbesondere zur Abgabe in Apotheken vorgeschlagen. Die einzelnen Verpackungen werden nach Art des enthaltenen Medikamentes, der Größe der Verpackungen und weiterer Daten registriert und in möglichst platzsparender Weise einsortiert.

In der Druckschrift DE 101 25 287 B4 mit dem Titel Regallager für eine chaotische Ablage von Stückgütern wird ein platzsparendes Deponieren von Arzneimittelpackungen in einem Apothekenregal, welches sich in einem Lagerraum befindet, vorgestellt. Die auf einem Einlagerungsförderband grob ausgerichteten Verpackungen werden z. B. über einen Barcode identifiziert, in ihren Kantenlängen vermessen und in dafür geeignete Regalfächer befördert. Die Handhabungseinrichtung mit einem Greifer besitzt zu diesem Zweck Sensoren. Die Vorrichtung wird vor allem durch die Verwendung eines modifiziert arbeitenden Klemmgreifers und durch das Vorhandensein eines Einlagerungs- und eines Stauförderbandes charakterisiert. Die Beschickung oder Entnahme ist auch hier nur an einer Regalseite oder an je einer Seite sich gegenüberstehenden Regalen möglich und es bedarf eines erheblichen konstruktiven Aufwandes und Platzes, eine derartige Einrichtung gegebenenfalls zu erweitern.

Die oben geschilderten Lösungen versuchen mit schrittweisen Verbesserungen die Konfektionierung, Deponierung und Ausgabe von Arzneimittelverpackungen zu vereinfachen und die Beschäftigten in Apotheken von eintönigen Sortier-, Registrier- und Überwachungstätigkeiten zu entlasten. Das gelingt mit dem Einsatz computergesteuerter Handhabungstechniken und automatisch ansteuerbarer Regalsysteme nur bis zu einem gewissen Grad. Auch die letztlich eingeführte chaotische Lagerhaltung, bei der keine Rücksicht auf das einzelne verpackte Medikament bezüglich der Zuordnung der Behandlung eines bestimmten Behandlungsbildes oder einer Erkrankung genommen wird, bringt nicht den höchstmöglichen Effekt der Raumnutzung, wenn nur an einer Regalseite oder nur an den Seiten sich gegenüberstehender Regale gearbeitet wird. Die bisher genutzten Regale bzw. Regalsysteme können in diesem Sinn nicht unbegrenzt in ihrer Höhe und Tiefe ausgedehnt werden, da dann insbesondere die Handhabungseinrichtungen zu sperrig und bewegungstechnisch nicht mehr beherrschbar sind.

Ein Regalsystem und ein Verfahren der oben genannten Gattung ist aus der Druckschrift DE 200 21 440 U1 bekannt. Diese Druckschrift offenbart eine Lagervorrichtung zur automatisierten Lagerung von Kleinstückgut, insbesondere von Arzneimittelpackungen in Apotheken, wobei gemäß einer Ausführungsvariante zwei, einander gegenüberstehende Regale vorgesehen sind, zwischen welchen eine Greifvorrichtung angeordnet ist, mit der das Stückgut in den Regalen abgelegt und aus diesen entnommen werden kann. Die Greifvorrichtung kann entlang einer Horizontalführung vor den Regalen hin und her bewegt werden und ist an einer Vertikalführung nach oben und unten beweglich, um bestimmte Regalböden in Regalen anfahren zu können. Das Stückgut wird mit einem an der Greifvorrichtung vorgesehenen Sauggreifer transportiert, wobei der Sauggreifer einen vor- und zurückfahrbaren Saugkopf und seitliche Greifbacken für das Kleinstückgut aufweist. In den Regalen sind teilweise an der selben Position im Regal unterschiedliche Waren hintereinander gelagert, um die Tiefe des Regalbodens optimal nutzen zu können. Somit entnimmt die Greifvorrichtung aus den Regalböden immer die vorn gelagerten Waren und legt neue Ware auch wieder auf der am weitesten vorn befindlichen Stelle im Regalboden ab.

Die bekannte Vorrichtung besitzt den Nachteil, dass sie durch die Anordnung der Horizontal-/Vertikalführung zwischen den Regalen wenig flexibel ist und einen hohen Platzbedarf besitzt. Darüber hinaus werden durch das in der Druckschrift DE 200 21 440 U1 beschriebene Entnahme- und Ablageprinzip immer nur die am weitesten vom liegenden Arzneimittelpackungen in den Regalen berücksichtigt, während weiter hinten liegende Packungen, welche unter Umständen ein früheres Verfallsdatum als die weiter vom liegenden Packungen besitzen, später als die vom liegenden Packungen aus dem Regal entnommen werden.

Das Hintereinanderlagern von Kleinstückgut innerhalb eines Ablagefaches besitzt außerdem den Nachteil, dass für das Auslagern ein hoher Zeitaufwand erforderlich ist. Um beispielsweise eine hinten in einem Ablagefach abgelegte Packung aus dem Ablagefach zu entnehmen sind grundsätzlich drei Vorgänge erforderlich: die in dem Ablagefach befindlichen Packungen müssen sämtlich ausgelagert werden, daraufhin müssen einzelne Packungen separiert werden und die verbleibenden Packungen müssen wieder eingelagert werden. Ein solch hoher Zeitaufwand ist für viele Nutzer solcher Lagersysteme nicht akzeptabel. Auch besteht beim Ein- und Auslagern von Lagerfächem, welche mehrere Packungen aufnehmen, eine erhebliche Prozessunsicherheit, da hintereinander lagernde Packungen sich in ihrer Länge und damit auch in den damit verbundenen Toleranzen addieren, wodurch es zu Problemen beim Erfassen der tatsächlich angeforderten Packung führen kann. Auch können sich durch das Hintereinanderlagern von Packungen die Laschen der Packungen beim Ein-, Aus- und Umlagern verhaken. In der Summe wird somit durch das Hintereinanderlagern von Packungen in einem Lagerfach zwar erreicht, dass der Platz, den solche Lagerautomaten zur Verfügung stellen, gut genutzt wird, wohingegen dieses Prinzip jedoch auch dazu führt, dass das zu entnehmende Kleinstückgut nur sehr langsam eingelagert und entnommen werden kann und zudem eine erhebliche Unsicherheit hinsichtlich der Entnahme von Kleinstückgut besteht.

Die Druckschrift JP 53 034278 beschreibt ein automatisiertes Lagersystem. Das Lagersystem umfasst eine Vielzahl von Schranksegmenten, die entlang von zwei parallelen, über den Schranksegmenten angeordneten Führungsschienen so verschiebbar sind, dass sich zwischen zwei Schranksegmenten ein Spalt einstellen lässt. Die Schranksegmente sind auf dem Boden des Lagersystems ebenfalls von parallel zu den Führungsschienen angeordneten Bodenführungsschienen geführt. Parallel zu den Führungschienen und den Bodenführungsschienen sind Transportkäflgführungsschienen angeordnet, auf welchen ein Transportkäfig, welcher eine Transporteinrichtung trägt, geführt ist, sodass der Transportkäfig parallel an den Schranksegmenten vorbeibewegt werden kann und vor dem Spalt positioniert werden kann. An den Schranksegmenten sind an einer Seite oben und unten Stege angeordnet, die eine unten und oben vorgesehene Transporteinrichtungsführungsschiene tragen, die senkrecht zu den Führungsschienen und den Transportkäfigführungsschienen verläuft. Die Konstruktion aus den Stegen und den Transporteinrichtungsführungsschienen ist in entsprechenden Aussparungen auf der Rückseite eines benachbarten Schranksegmentes einführbar, sodass der Spalt auch geschlossen werden kann. Der Transportkäfig weist ebenfalls Führungsschienen auf, die an die Transporteinrichtungsführungsschienen der Schranksegmente ankoppeln können. Somit kann die Transporteinrichtung von dem Transportkäfig in den Spalt überführt werden, wobei sich die Transporteinrichtung senkrecht zu der Bewegungsrichtung der Schranksegmente in dem Spalt bewegen kann. Die Transporteinrichtung weist ein vertikal verschiebbares Greifelement auf, mit welchem Stückgut aus den Schranksegmenten entnommen oder in das Schranksegment eingelagert werden kann, wobei das Greifelement auf dem Prinzip eines Gabelstaplers beruht.

In der Druckschrift JP 03259803 werden ein Regalsystem gemäß dem Oberbegriff des Anspruchs 1 und ein Verfahren gemäß dem Oberbegriff des Anspruchs 9 offenbart.

Es ist daher die Aufgabe der vorliegenden Erfindung, ein Regalsystem zur automatisierten Lagerung von Kleinstückgut und ein entsprechendes Verfahren zur Verfügung zu stellen, welches eine flexible und logische Lagerung von Kleinstückgut erlaubt, wobei es zusätzlich möglich sein soll, große Mengen an Kleinstückgut auf möglichst geringem Platz lagern zu können.

Diese Aufgabe wird vorrichtungsseitig durch ein Regalsystem nach Anspruch 1 gelöst.

Das erfindungsgemäße Regalsystem nutzt als Lösungsansatz zur Erhöhung der Einlagerungskapazität bei Beibehaltung und Nutzung des zur Verfügung stehenden Stauraumes hinsichtlich eines in einer konkreten Räumlichkeit aufstellbaren Regalsystems ein variable Veränderbarkeit der Position und der Zugänglichkeit eines aus mehreren Schranksegmenten bestehenden Regalsystems. Entsprechend ist es durch das erfindungsgemäße Regalsystem möglich, auf geringem Raum ein Regalsystem mit viel Platz für das aufzubewahrende Kleinstückgut zur Verfügung zu stellen.

In jedem der Schranksegmente ist Kleinstückgut, wie zum Beispiel Arzneimittelpackungen, aufbewahrbar. Zudem ist jedes der Schranksegmente durch die Verfahrbarkeit der Schranksegmente und dem zwischen den Schranksegmenten einstellbaren Spalt für die Stückguttransportvorrichtung zugänglich. Auf diese Weise kann durch die spezielle, von der Führung von der Schranksegmente entkoppelte Horizontal- und Vertikalführung die Stückguttransportvorrichtung vorteilhaft zwischen den Schranksegmenten positioniert werden und dort das Kleinstückgut entnehmen oder ablegen.

Obwohl es gemäß der vorliegenden Erfindung möglich ist, mehrere Schranksegmente nebeneinander zu positionieren und entsprechend viel Platz für das aufzubewahrende Kleinstückgut zur Verfügung zu stellen, ist durch den wandernden Spalt der Gesamtplatzbedarf für das Regalsystem gering, da der Spalt immer an der Stelle eingestellt werden kann, an welcher das Kleinstückgut gelegt oder entnommen werden soll.

Somit stellt die vorliegende Erfindung ein Regalsystem zur Verfügung, welches zwar aus mehreren verschieblichen Schranksegmenten besteht aber dennoch kompakt aufstellbar ist. Als Stückguttransportvorrichtung kann ein in mehreren Achsen bewegbarer Beschickungs- und Entnahmeroboter unter Zuhilfenahme peripherer Fördereinrichtungen verwendet werden, so dass unter Vermeidung extensiver Regalerweiterungen der vorhandene Stauraum gut genutzt werden kann, da die jeweiligen Schranksegmente von beiden Seiten durch Nutzen des wandernden Spalts erreichbar sind.

Zudem besitzt das erfindungsgemäße Regalsystem den Vorteil, dass nur eine Stückguttransportvorrichtung erforderlich ist, welche mittels der Horizontal- und Vertikalführung frei in dem kartesischen System des Regalsystems bewegbar ist. Somit kann vorhandener Lagerraum intensiv genutzt werden, wobei es gleichzeitig möglich ist, das Regalsystem in einer von einem Verkaufsraum entfernten Stelle zu positionieren, um in dem Verkaufsraum den zur Verfügung stehenden Platz zu erhöhen. Somit kann ein Verkaufsraum kundenfreundlicher gestaltet werden und die Kundenfrequenz erhöht werden.

Entsprechend einer vorteilhaften Weiterbildung der Erfindung sind die Schranksegmente durch horizontale Führungsschienen geführt. Entlang der Führungsschienen können die Schranksegmente präzise, sicher und leicht verschoben werden, so dass bei Einsatz entsprechender Motoren schnell ein geeigneter Spalt zwischen zwei der Schranksegmente eingestellt werden kann. Durch die Schienenführung ist es möglich, eine Positionierung der Schranksegmente mit einer Genauigkeit im Millimeterbereich bzw. im 1/10-Millimeterbereich vorzunehmen.

Gemäß einer vorteilhaften Ausführungsform der vorliegenden Erfindung weist die Horizontal- und Vertikalführung für die Stückguttransportvorrichtung eine vertikale Achse, zwei horizontale Achsen in Bewegungsrichtung der Schranksegmente und eine horizontale Achse quer zur Bewegungsrichtung der Schranksegmente auf, welche die beiden in Bewegungsrichtung der Schranksegmente verlaufenden horizontalen Achsen miteinander verbindet.

Hierbei hat es sich besonders bewährt, wenn die zwei in Bewegungsrichtung der Schranksegmente verlaufenden horizontalen Achsen parallel zu den Führungsschienen für die Schranksegmente und den Führungsschienen gegenüber angeordnet sind.

Durch diese Anordnung kann die Stückguttransportvorrichtung unabhängig von der Führung für die Schranksegmente in x-, y- und z-Richtung bewegt werden, um vor einem der Schranksegmente präzise positioniert werden zu können.

In einer weiteren Ausgestaltungsvariante der vorliegenden Erfindung weist die Horizontal- und Vertikalführung für die Stückguttransportvorrichtung eine vertikale Achse, zwei horizontale Achsen in Bewegungsrichtung der Schranksegmente und eine horizontale Achse quer zur Bewegungsrichtung der Schranksegmente auf, wobei die vertikale Achse die beiden in Bewegungsrichtung der Schranksegmente verlaufenden horizontalen Achsen miteinander verbindet. Hierbei ist es besonders günstig, wenn die zwei in Bewegungsrichtung der Schranksegmente verlaufenden horizontalen Achsen parallel zu den Führungsschienen für die Schranksegmente und auf einer Seite neben der Führungsbahn für die Schranksegmente vorgesehen sind.

Auch auf diese Weise lässt es sich konstruktiv ermöglichen, dass die Stückguttransportvorrichtung unabhängig von der Führung für die Schranksegmente in x-, y- und z-Richtung verfahrbar ist, um sehr genau an geeigneter Stelle vor einem der Schranksegmente positioniert werden zu können.

In einer weiteren günstigen Ausführungsform der Erfindung weist die Horizontal- und Vertikalführung für die Stückguttransportvorrichtung zwei vertikale Achsen, zwei horizontale Achsen in Bewegungsrichtung der Schranksegmente und eine quer zur Bewegungsrichtung der Schranksegmente verlaufende horizontale Achse auf, die die zwei vertikalen Achsen miteinander verbindet. Vorteilhafterweise sind hierbei die zwei in Bewegungsrichtung der Schranksegmente verlaufenden horizontalen Achsen parallel zu den Führungsschienen für die Schranksegmente, jeweils seitlich der Führungsschienen, außerhalb der Führungsbahn für die Schranksegmente vorgesehen.

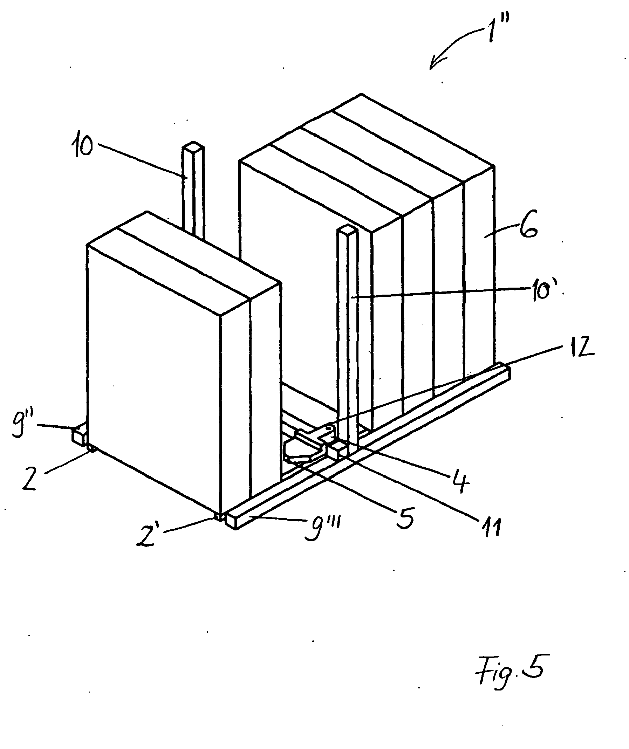

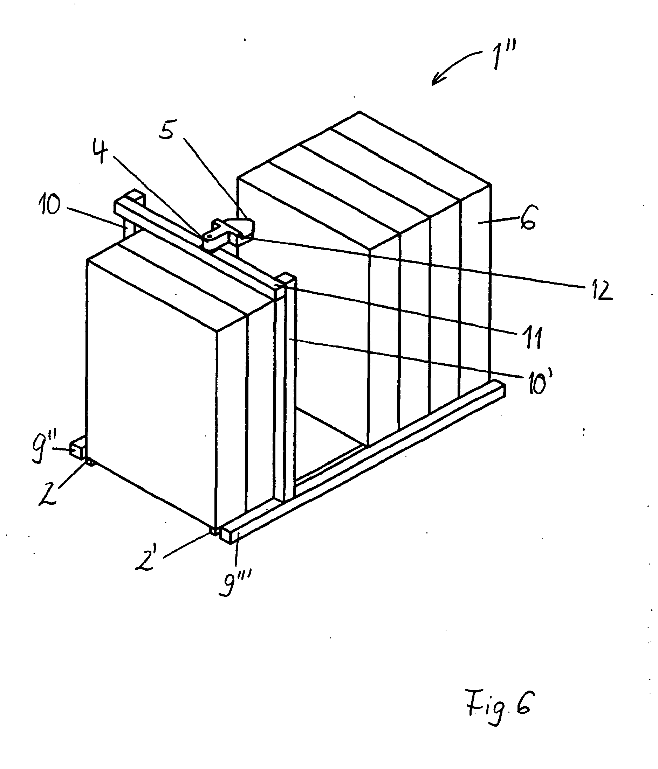

Mit dieser Ausführungsform ist es ebenfalls möglich, die Stückguttransportvorrichtung unabhängig von der Führung für die Schranksegmente in x-, y- und z-Richtung zu verfahren, um diese hochgenau an geeigneter Stelle vor einem der Schranksegmente zu positionieren. Zudem eignet sich diese Ausführungsvariante insbesondere, um schwere Lasten zu transportieren und zu lagern. Im Gegensatz zu den anderen, oben beschriebenen Ausführungsvarianten der Erfindung, in welchen die Auslegerachse nur an einer Seite fest eingebunden ist, besitzt die beispielsweise in den Figuren 5 und 6 dargestellte Ausführungsform den Vorteil, dass eine doppelte Führung in Form von zwei parallelen Achsen außen neben den Schienen sowie zwei senkrechten Achsen zur Vertikalführung, die oben und unten geführt werden können, vorgesehen ist. Dadurch ist es möglich, sogar schweres Kleingut wie zum Beispiel Schraubenkisten oder Werkzeuge transportieren und lagern zu können.

Gemäß einer bevorzugten Ausbildung der Erfindung weisen die Schranksegmente Lagerfächer mit einer durch eine Lagerfachrückwand bestimmten Tiefe auf, und die Lagerfächer sind zur Aufnahme jeweils nur eines Kleinstückguts ausgebildet. Dies hat den Vorteil, dass dann, wenn die Stückguttransportvorrichtung das in einem Lagerfach aufbewahrte Kleinstückgut aufnehmen will, das Kleinstückgut durch die Stückguttransportvorrichtung bis an die Lagerfachrückwand geschoben werden kann, wobei die Lagerfachrückwand einen Rückhalt für das Kleinstückgut bildet und dabei das Kleinstückgut besonders gut durch die Stückguttransportvorrichtung am vorderen Ende des Kleinstückguts angesaugt werden kann.

Zudem wird durch die Aufbewahrung nur eines Kleinstückguts pro Lagerfach erreicht, dass das jeweilige Lagerfach nicht mit überaltertem Kleinstückgut gefüllt wird sondern sich immer wieder aktuelles Kleinstückgut in dem jeweiligen Lagerfach befindet bzw. in dieses eingelegt oder aus diesem entnommen wird. Durch die Aufnahme nur eines Kleinstückguts kann die Stückguttransportvorrichtung dieses bis an das Ende des Lagerfaches zurückdrängen, ohne dass dahinter liegendes Kleinstückgut auch zurückgedrängt werden muss, wodurch sich das zu entnehmende Kleinstückgut besonders gut aufnehmen lässt. Da nur ein Kleinstückgut pro Lagerfach gelagert wird, können mit Hilfe des erfindungsgemäßen Regalsystems sehr schnelle Ein-, Aus- und Umlagerungsprozesse ausgeführt werden. Zudem erfolgt eine Kleinstückentnahme mit sehr hoher Sicherheit, da es innerhalb eines Lagerfaches zu keinen Verwechslungen kommen kann.

Durch das Zurückdrängen des Kleinstückgutes mittels der Stückguttransportvorrichtung an die Rückwand des Lagerfaches wird zudem das jeweilige Kleinstückgut parallel zur Rückwand und damit senkrecht zu einem Sauger der Stückguttransportvorrichtung ausgerichtet. Dies erleichtert die Aufnahme des Kleinstückgutes durch die Stückguttransportvorrichtung. Die Ausrichtung des Kleinstückgutes innerhalb eines Lagerfaches senkrecht zu einem Sauger der Stückguttransportvorrichtung kann zudem zusätzlich durch die Ausbildung von Fachteilern links und rechts als Lagerfachbegrenzung verbessert werden, um die Ausrichtung des Kleinstückgutes, wie beispielsweise einer Medikamentenpackung, klar zu definieren.

Es hat sich zudem als vorteilhaft erwiesen, wenn die Lagerfächer aus gefalzten Aluminiumböden ausgebildet sind. Aluminium besitzt den Vorteil, dass es im Vergleich zu den im Stand der Technik meist eingesetzten Glasböden ein geringes Gewicht besitzt, trotz geringer Blechstärke eine hohe Stabilität aufweist und flexibel einsetzbar ist. Die Stabilität der Aluminiumböden wird durch die Falz unterstützt, welche eine Klebefläche des Fachbodens an einer Rückwand des jeweiligen Schranksegmentes ausbildet. Mit der Falz kann somit der Fachboden sicher an dem jeweiligen Schranksegment fixiert werden, wobei zusätzlich durch die Falz die Form des Fachbodens aus Aluminium stabilisiert wird. Durch den Einsatz von Aluminium sowie mittels der Falz- und Klebetechnik kann das gesamte erfindungsgemäße Regalsystem mit leichtem Gewicht zur Verfügung gestellt werden. Zudem besitzen die Aluminiumböden den Vorteil, dass sie unabhängig von den übrigen Bauteilen des Regalsystems produzierbar und transportabel sind, so dass das Regalsystem ohne Weiteres vor Ort mit den Aluminiumböden ausgestattet werden kann. Vorteilhafterweise werden die Fachböden durch Fachteiler in Lagerfächer aufgeteilt. Diese werden auf den Fachboden geklebt und trennen dadurch die Lagerfächer untereinander ab. Dies ermöglicht es, Kleinstückgut in den Schranksegmenten sicher und definiert zu lagern.

Gemäß einem vorteilhaften Beispiel der Erfindung bilden die geklebten Fachteiler auf dem Fachboden parallele Rippen aus, welche erheblich zur Formstabilisierung des Fachbodens beitragen. Solche Rippen bilden eine Art Trägerwerk aus, wobei der Träger oben auf dem Fachboden angebracht ist und zusätzlich als Fachteiler dient. Entsprechend ist es möglich, Schranksegmente bzw. Fachböden mit einer Vielzahl von Lagerplätzen für das einzulagernde Kleinstückgut, beispielsweise ca. 1.500 Lagerplätzen pro verfahrendem Schranksegment, vorzufertigen und in einem Stück zum Kunden zu transportieren und dort mit den übrigen Bauteilen des Regalsystems zu montieren.

Es ist besonders günstig, wenn die Lagerfächer von vorn nach hinten abfallend geneigt sind. Somit kann in ein Lagerfach eingebrachtes Kleinstückgut in das Lagerfach hineinrutschen, so dass es vorteilhafterweise nahe an der Lagefachrückwand anliegt und somit besonders leicht durch die Stückguttransportvorrichtung entnommen werden kann.

Im Unterschied zu bekannten Regalsystemen im Stand der Technik weist die Stückguttransportvorrichtung der vorliegenden Erfindung einen vor- und zurückfahrbaren Saugkopf und keine seitlichen Greifelemente auf. Überraschenderweise sind bei der vorliegenden Erfindung die im Stand der Technik üblichen seitlichen Greifelemente nicht erforderlich obwohl dennoch das Kleinstückgut sicher in dem Regalsystem positionierbar und aus diesem entnehmbar ist. Dies wird allein durch den vor- und zurückfahrbaren Saugkopf gewährleistet, welcher an einer Vorderseite des Kleinstückguts dieses ansaugt und allein dadurch innerhalb des Regalsystems transportiert.

Erfindungsgemäß ist die Stückguttransportvorrichtung um ihre eigene Achse um wenigstens 180° schwenkbar. Damit ist es besonders leicht, die Stückguttransportvorrichtung jeweils so auszurichten, dass sie Kleinstückgut aus einem Lagerfach des Regalsystems entnehmen oder dort ablegen kann bzw. das Kleinstückgut aus einer einem Lagerfach entgegengesetzten Richtung zu dem Lagerfach transportieren oder aus dem Lagerfach in eine andere Richtung wegtransportieren kann. Dies kann durch die einfache Schwenkbarkeit der Stückguttransportvorrichtung in kurzer Zeit ermöglicht werden, wodurch eine schnelle Einlagerung oder Auslagerung von Kleinstückgut realisiert werden kann.

Es ist besonders von Vorteil, wenn an der Stückguttransportvorrichtung Sensoren zur Erfassung der Größe und/oder der Lage und/oder der Identifikation des zu transportierenden Kleinstückgutes vorgesehen sind. Aufgrund der erfassten Größe und/oder Lage des zu transportierenden Kleinstückgutes kann die Stückguttransportvorrichtung so positioniert werden, dass sie an geeigneter Stelle vor dem Kleinstückgut an dieses herangefahren werden kann, um dieses möglichst sicher aufnehmen und transportieren zu können. Anhand festgestellter Identifikationsdaten des Kleinstückgutes kann zudem geprüft werden, ob das entnommene Kleinstückgut dem angeforderten Kleinstückgut entspricht. Somit können schon bei Aufnahme des Kleinstückgutes durch die Stückguttransportvorrichtung aus einem Lagerfach des Regalsystems wichtige Daten erfasst werden, welche eine Überprüfbarkeit des Vorgangs der Kleinstückgutentnahme oder -ablage ermöglichen.

Entsprechend einer weiteren Ausführungsvariante der vorliegenden Erfindung sind die Schranksegmente unabhängig voneinander horizontal, senkrecht zu der durch ihre Führung definierten Bewegungsrichtung der Schranksegmente herausziehbar. Somit ist es für einen Nutzer des Regalsystems möglich, durch Herausziehen der Schranksegmente seitlich in die Schranksegmente einsehen zu können, um gegebenenfalls dort Kleinstückgut ablegen oder aus dem Regalsystem entnehmen zu können. Auf diese Weise können die Schranksegmente aus dem Regalsystem herausgezogen werden, ohne dass ein Nutzer des Regalsystems dieses betreten muss. Die Schranksegmente können beispielsweise auch während eines Stromausfalls von Hand bedient und nach außen herausgezogen werden, um dort an die Ablagefächer herankommen zu können.

Verfahrensseitig wird die Aufgabe der Erfindung durch ein Verfahren nach Anspruch 9 gelöst.

Mit Hilfe des erfindungsgemäßen Verfahren kann zwischen den Schranksegmenten bzw. vor einem seitlichen Schranksegment des Regalsystems ein wandernder Spalt zur Verfügung gestellt werden, in welchen die Stückguttransportvorrichtung vorteilhaft einfahren und aus diesem herausfahren kann, um aus den Schranksegmenten Kleinstückgut zu entnehmen oder dort abzulegen. Ebenso können die Schranksegmente wieder nach einer Ablage oder Entnahme von Kleinstückgut zusammengeschoben werden, so dass effektiv ein sehr geringer Platzbedarf für das Regalsystem erforderlich ist. Somit kann auf kleinstem Raum eine große Menge an Kleinstückgut flexibel entnehmbar und ablegbar eingelagert werden.

Günstigerweise werden die Schranksegmente entlang horizontaler Führungsschienen verschoben. Die Verschiebbarkeit entlang der Führungsschienen ermöglicht ein leichtes und dennoch sicheres Hin- und Herbewegen der Schranksegmente, um zwischen den Schranksegmenten einen Spalt einzustellen, in den die Stückguttransportvorrichtung eingebracht werden kann.

Gemäß einer bevorzugten Ausführungsform der vorliegenden Erfindung fährt die Stückguttransportvorrichtung beim Entnehmen eines Kleinstückgutes aus einem Lagerfach eines Schranksegmentes soweit in das Lagerfach hinein, dass das zu entnehmende Kleinstückgut an einer Rückwand des Lagerfaches anstößt, und das Kleinstückgut wird von einem Ansaugkopf der Stückguttransportvorrichtung angesaugt und aus dem Lagerfach entnommen, ohne dass das Kleinstückgut seitlich ergriffen wird. Dies hat den Vorteil, dass die Stückguttransportvorrichtung lediglich mit einem Ansaugkopf ausgestattet sein muss, um das Kleinstückgut aus dem Lagerfach zu entnehmen bzw. in dem Lagerfach abzulegen. Da keine seitlichen Greifer an der Stückguttransportvorrichtung vorgesehen sein müssen, kann die Stückguttransportvorrichtung besonders leicht, preiswert und kompakt hergestellt werden. Durch das geringe Gewicht der Stückguttransportvorrichtung kann diese an einer freischwebenden Achse mit nur einer Aufhängung bewegbar befestigt werden, wodurch die Koordinatensysteme zum Bewegen der Schranksegmente des Regalsystems und zum Bewegen der Stückguttransportvorrichtung besonders vorteilhaft voneinander entkoppelbar sind.

Entsprechend einer vorteilhaften Weiterbildung der Erfindung werden die Größe und/oder die Lage und/oder Identifikationsdaten des zu transportierenden Kleinstückgutes mit an der Stückguttransportvorrichtung vorgesehenen Sensoren erfasst. Somit kann anhand der erfassten Daten überprüft werden, ob das entnommene Kleinstückgut dem von einem Nutzer des Regalsystems angeforderten Kleinstückgut entspricht. Zudem kann die Stückguttransportvorrichtung an geeigneter Stelle vor dem zu transportierenden Kleinstückgut positioniert werden, um dieses möglichst sicher zu erfassen und innerhalb des Regalsystems transportieren zu können.

Vorteilhafte Ausführungsformen der Erfindung, deren Vorteile und Funktion werden im Folgenden anhand der Figuren der Zeichnung näher erläutert, wobei
- Figur 1: schematisch eine erste Ausführungsform eines Regalsystems gemäß der vorliegenden Erfindung zeigt, wobei sich eine Stückguttransportvorrichtung in einer ersten Position befindet;
- Figur 2: schematisch die Ausführungsform des erfindungsgemäßen Regalsystems von Figur 1 zeigt, wobei sich die Stückguttransportvorrichtung in einer zweiten Position befindet;
- Figur 3: schematisch eine weitere Ausführungsform des Regalsystems gemäß der vorliegenden Erfindung zeigt, wobei sich eine Stückguttransportvorrichtung in einer ersten Position befindet;
- Figur 4: schematisch die Ausführungsform des Regalsystems von Figur 3 zeigt, wobei sich die Stückguttransportvorrichtung in einer zweiten Position befindet;
- Figur 5: schematisch noch eine weitere Ausführungsform eines Regalsystems gemäß der vorliegenden Erfindung zeigt, wobei sich eine Stückguttransportvorrichtung in einer ersten Position befindet;
- Figur 6: schematisch die Ausführungsform des erfindungsgemäßen Regalsystems von Figur 5 zeigt, wobei sich die Stückguttransportvorrichtung in einer zweiten Position befindet;
- Figur 7: schematisch eine Ausführungsvariante eines äußeren Aufbaus des erfindungsgemäßen Regalsystems zeigt;
- Figur 8: schematisch die Ausführungsvariante des erfindungsgemäßen Regalsystems von Figur 7 mit einer geöffneten Seite des Regalsystems zeigt;
- Figur 9: schematisch das erfindungsgemäße Regalsystem aus Figur 7 und 8 zeigt, wobei ein Schranksegment des Regalsystems seitlich herausgezogen ist;
- Figur 10: schematisch einen Einblick in das erfindungsgemäße Regalsystem von Figur 7 bis 9 ohne Einhausung, seitlich von hinten und unten gesehen, gibt;
- Figur 11: schematisch das erfindungsgemäße Regalsystem der Figuren 7 bis 10 ohne Einhausung zeigt;
- Figur 12: schematisch das erfindungsgemäße Regalsystem von Figur 7 bis 11 ohne Einhausung, seitlich von vorn und oben gesehen, zeigt;
- Figur 13: schematisch eine Ausführungsform eines Schranksegmentes mit einer darüber angeordneten Stückguttransportvorrichtung eines Regalsystems gemäß der vorliegenden Erfindung zeigt;
- Figur 14: schematisch eine zwischen zwei Schranksegmenten eines erfindungsgemäßen Regalsystems angeordnete Stückguttransportvorrichtung aus einer Sicht von oben während eines Ablegens oder Entnehmens eines Kleinstückgutes zeigt;
- Figur 15: schematisch eine zwischen zwei Schranksegmenten eines erfindungsgemäßen Regalsystems angeordnete Stückguttransportvorrichtung während eines Transports eines Kleinstückgutes zeigt; und
- Figur 16: schematisch ein mögliches Beispiel der Ausbildung von Lagerfächern für ein Schranksegment der vorliegenden Erfindung aus gefalzten Aluminiumböden zeigt.

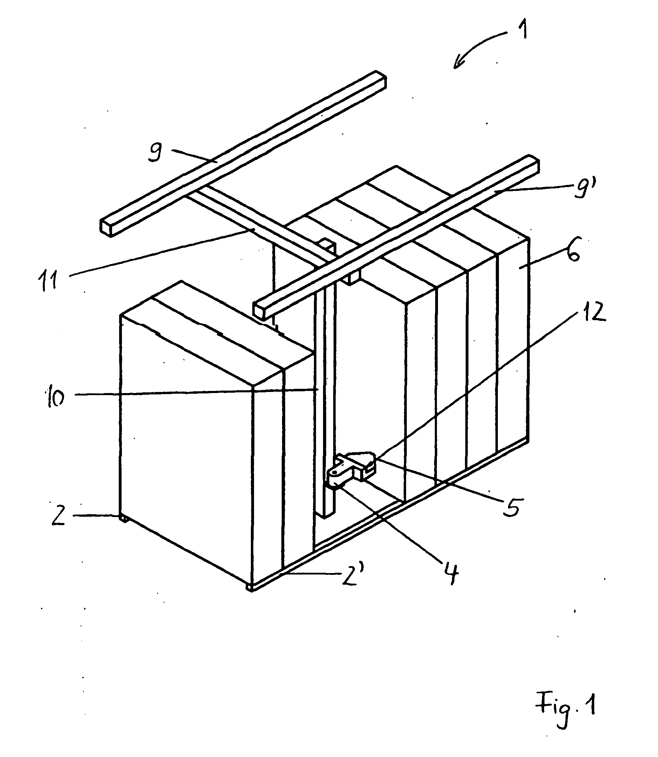

Figur 1 zeigt schematisch einen möglichen Grundaufbau eines erfindungsgemäßen Regalsystems 1 in einer Perspektivansicht. Das Regalsystem 1 weist mehrere Schranksegmente 6 auf. Die Schranksegmente 6 sind nebeneinander angeordnet und beweglich auf Laufschienen 2, 2' gelagert. Die Schranksegmente 6 sind dabei so hin- und herverschiebbar, dass zwischen wenigstens zwei der Schranksegmente 6 oder zwischen einem Seitenteil 22 und einem dazu benachbarten Schranksegment 6 ein Spalt 3 einstellbar ist. In den Spalt 3 kann eine Stückguttransportvorrichtung 12, wie in Figur 1 gezeigt, hineinbewegt und aus diesem herausbewegt werden.

Hierfür ist die Stückguttransportvorrichtung 12 beweglich an einem eine Horizontal- und Vertikalführung für die Stückguttransportvorrichtung 12 ausbildenden Achssystem befestigt. Das Achssystem weist in der Ausführungsform nach Figur 1 eine sich vertikal erstreckende Achse 10, zwei sich horizontal in der durch den Pfeil A gekennzeichneten Bewegungsrichtung der Schranksegmente 6 erstreckende Längsachsen 9, 9' und eine sich horizontal erstreckende und die beiden Längsachsen 9, 9' verbindende Horizontalachse 11 auf. Die Vertikalachse 10 ist beweglich mit der Horizontalachse 11 verbunden, so dass die Vertikalachse 10 mit der Stückguttransportvorrichtung 12 entlang der Horizontalachse 11 in dem Spalt 3 hin- und herbewegbar ist sowie in den Spalt 3 hineinfahrbar und aus diesem herausfahrbar ist.

Die Stückguttransportvorrichtung 12 kann entlang der Vertikalachse 10 nach oben und nach unten verschoben werden. Zudem ist die Stückguttransportvorrichtung 12 über eine Rotationsachse 4 um wenigstens 180° schwenkbar gelagert, so dass sie sich sowohl dem in Figur 1 gezeigten Schranksegment 6 als auch dem gegenüberliegenden Schranksegment 6 zuwenden kann, um aus diesen Schranksegmenten 6 in Figur 1 nicht gezeigtes Kleinstückgut 13 zu entnehmen bzw. in diesen abzulegen.

Die Stückguttransportvorrichtung 12 ist im Wesentlichen ein Beschickungs- und Entnahmeroboter, welcher schwenk- und translatorische Bewegungen ausführen kann und dabei zusätzlich mit Sensoren zum Erkennen der Größe und/oder der Lage und/oder von Identifikationsdaten des zu transportierenden Kleinstückgutes 13 ausgestattet ist. So können durch die Sensoren beispielsweise Verpackungsgrößen, der Inhalt von Verpackungen, das Verfallsdatum des Inhalts von Verpackungen, die vorhandene Lagerkapazität des Regalsystems 1 usw. erfasst werden.

Die Stückguttransportvorrichtung 12 weist in ihrem vorderen Bereich einen Saugkopf 5 auf, welcher an in Figur 1 nicht gezeigtes Kleinstückgut 13 in den Schranksegmenten 6 heranfahrbar ist, um das Kleinstückgut 13 anzusaugen.

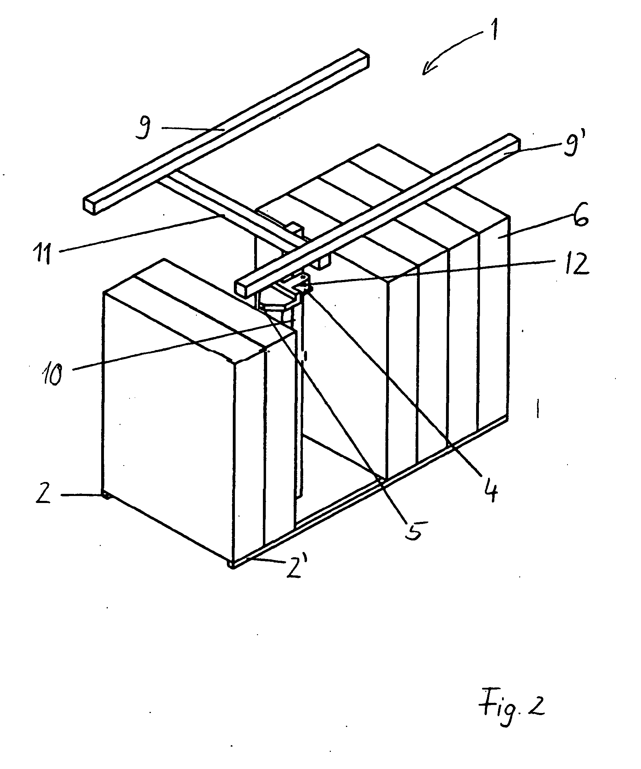

Figur 2 zeigt schematisch die in Figur 1 dargestellte Ausführungsform des Regalsystems 1 der vorliegenden Erfindung, wobei die Stückguttransportvorrichtung 12 entlang der Vertikalachse 10 aus dem Spalt 3 nach oben herausgefahren ist. In der dargestellten Position ist die Stückguttransportvorrichtung 12 oberhalb der Schranksegmente 6 angeordnet und kann von dem Spalt 3 weggefahren werden.

In der in den Figuren 1 und 2 gezeigten Regalsystemanordnung 1 sind die zwei in Bewegungsrichtung der Schranksegmente 6 verlaufenden horizontalen Achsen 9, 9' parallel zu den Führungs- bzw. Laufschienen 2, 2' für die Schranksegmente 6 in den Führungsschienen 2, 2' gegenüber angeordnet. Dabei ist jedoch das Koordinatensystem des Achssystems mit der Führung für die Stückguttransportvorrichtung 12 vollständig von dem Koordinatensystem der Führungsschienen 2, 2' entkoppelt. Auf diese Weise kann die Stückguttransportvorrichtung 12 unabhängig von den Schranksegmenten 6 aber dennoch immer in Relation zu den Schranksegmenten 6 bewegt werden.

Das erfindungsgemäße Regalsystem 1 arbeitet nach dem Prinzip des wandernden Spaltes 3, welcher zwischen den seitlich bewegbaren Schranksegmenten 6 einstellbar ist. In dem gezeigten Beispiel befindet sich an einer offenen Rückseite des kompakten Regalsystems 1 die ansteuerbare Stückguttransportvorrichtung 12, welche über die Führungsbahnen 9, 9', die Quertraverse 11 und die vertikale Halteeinrichtung 10 jede Position an und zwischen zwei Schranksegmenten 6 bis hin zu einem Ablagefach 7 erreichen kann. Die Stückguttransportvorrichtung 12 ist vor Ort um wenigstens 180° schwenkbar und ist in der Lage, vor Ort alle definiert eingestellten Tiefen t der Ablagefächer 7 zu erreichen.

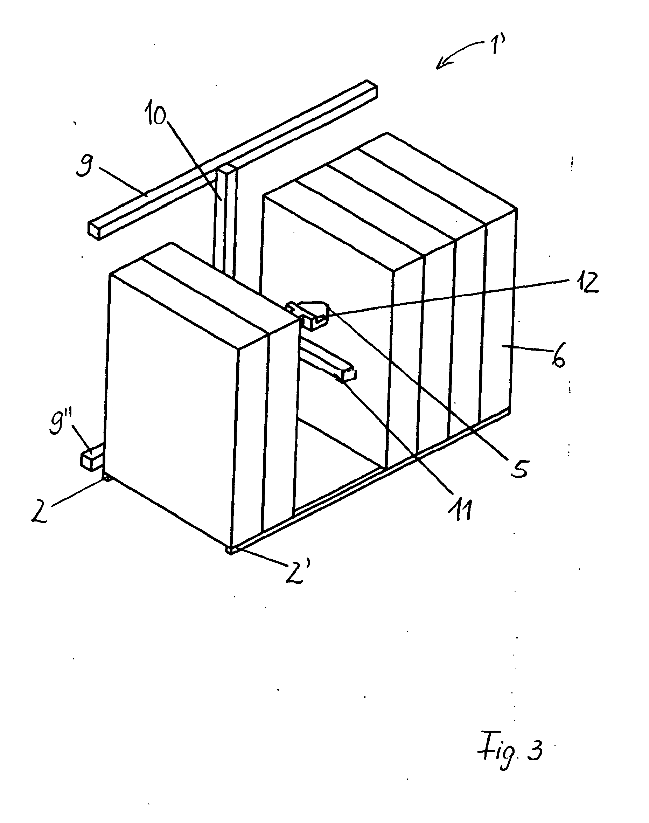

Figur 3 zeigt schematisch eine weitere mögliche Ausführungsform der vorliegenden Erfindung anhand des Regalsystems 1'. Das Regalsystem 1' weist wie das Regalsystem 1 aus den Figuren 1 und 2 eine Mehrzahl nebeneinander angeordneter und auf Führungsschienen 2, 2' verfahrbar gelagerter Schranksegmente 6 auf, durch deren Verfahrbarkeit entlang der Führungsschienen 2, 2' ein Spalt 3 zwischen zwei Schranksegmenten 6 oder zwischen einem Seitenteil 22 des Regalsystems 1' und einem dazu benachbarten Schranksegment 6 einstellbar ist.

Das Regalsystem 1' weist ferner eine elektromotorisch angetriebene Horizontal- und Vertikalführung für eine Stückguttransportvorrichtung 12 auf, wobei die Horizontal- und Vertikalführung im Wesentlichen durch ein Achssystem realisiert ist, an welchem die Stückguttransportvorrichtung 12 beweglich gelagert ist. Das Achssystem des Regalsystems 1' weist eine vertikale Achse 10 auf, die zwei horizontale, in Bewegungsrichtung der Schranksegmente 6 verlaufende Längsachsen 9, 9' miteinander verbindet. Mit der Vertikalachse 10 ist eine horizontale Achse 11 verbunden, welche quer zur Bewegungsrichtung A der Schranksegmente 6 angeordnet ist. Die beiden in Bewegungsrichtung A der Schranksegmente 6 verlaufenden horizontalen Längsachsen 9, 9" verlaufen parallel zu den Führungsschienen 2, 2' für die Schranksegmente 6 und sind seitlich neben der Führungsbahn für die Schranksegmente 6 vorgesehen. Auf diese Weise ragt die Horizontalachse 11 seitlich in das Regalsystem 1' hinein und kann in dem Spalt 3 zwischen den Schranksegmenten 6 mit der Stückguttransportvorrichtung 12 positioniert werden.

Bezüglich der Stückguttransportvorrichtung 12 in der Ausführungsform von Figur 3 wird auf die Ausführungen zu der Stückguttransportvorrichtung 12 aus den Figuren 1 und 2 verwiesen.

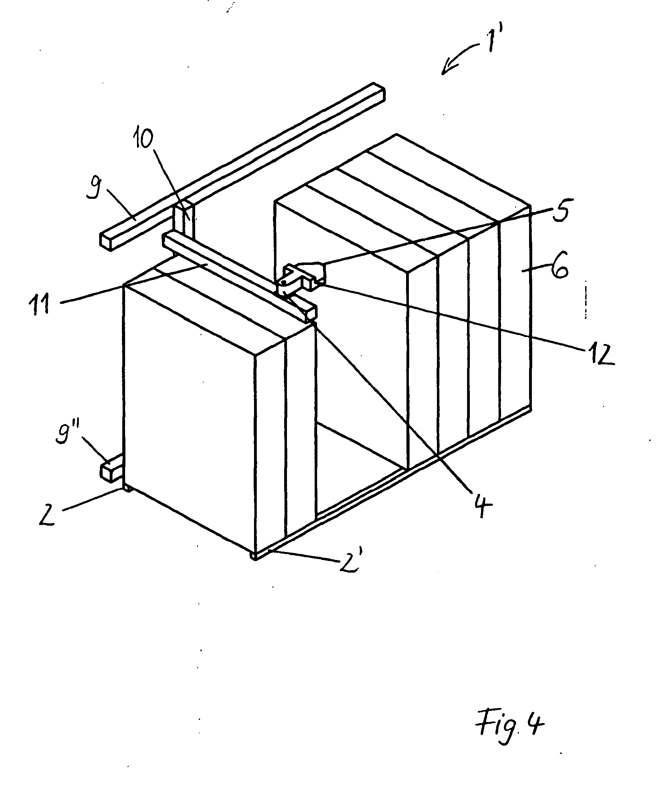

Figur 4 zeigt schematisch das Regalsystem 1' aus Figur 3, wobei sich die Stückguttransportvorrichtung 12 in einer Position oberhalb der Schranksegmente 6 befindet, wo sie durch die Horizontal- und Vertikalführung frei oberhalb der Schranksegmente 6 beweglich ist.

Figur 5 zeigt schematisch noch eine weitere Ausführungsvariante eines erfindungsgemäßen Regalsystems 1". Ebenso wie die Regalsysteme 1 und 1' aus den Figuren 1 bis 4 weist das Regalsystem 1" mehrere nebeneinander angeordnete Schranksegmente 6 auf, welche entlang von Führungsschienen 2, 2' so relativ zueinander verfahrbar sind, dass ein Spalt 3 zwischen zwei der Schranksegmente 6 einstellbar ist. Des Weiteren weist das Regalsystem 1" eine Horizontal- und Vertikalführung für eine Stückguttransportvorrichtung 12 auf, wobei die Horizontal- und Vertikalführung im Wesentlichen durch ein Achssystem gewährleistet ist, mit welchem die Stückguttransportvorrichtung 12 beweglich verbunden ist.

Die Horizontal- und Vertikalführung für die Stückguttransportvorrichtung 12 gemäß dem Regalsystem 1" weist zwei vertikale Achsen 10, 10', zwei horizontale Längsachsen 9", 9'" in Bewegungsrichtung A der Schranksegmente 6 und eine quer zur Bewegungsrichtung A der Schranksegmente 6 verlaufende horizontale Achse 11 auf, die die zwei vertikalen Achsen 10, 10' miteinander verbindet. Die zwei in Bewegungsrichtung der Schranksegmente 6 verlaufenden horizontalen Achsen 9", 9'" sind parallel zu den Führungsschienen 2, 2' für die Schranksegmente 6 ausgebildet und jeweils seitlich der Führungsschienen 2, 2', außerhalb der Führungsbahn für die Schranksegmente 6 vorgesehen.

Parallel zu den horizontalen Achsen 9" und 9"' können oberhalb der Schranksegmente 6 in Figur 5 zwei weitere in Bewegungsrichtung der Schranksegmente 6 verlaufende horizontale Achsen 9 vorgesehen sein. Auf diese Weise können die zwei senkrechten Achsen 10, 10' zur Vertikalführung sowohl oben als auch unten geführt werden. Mit einer solchen Konstruktion kann insbesondere schweres Kleingut 13, wie zum Beispiel Schraubenkisten oder Werkzeuge, besonders gut transportiert und in dem Regalsystem 1" gelagert werden.

In dem in Figur 5 gezeigten Beispiel befindet sich die Stückguttransportvorrichtung 12 in dem Spalt 3 zwischen zwei Schranksegmenten 6. Hinsichtlich der Ausbildung der Stückguttransportvorrichtung 12 wird auf obige Ausführungen zu den Figuren 1 bis 4 verwiesen. In dem in Figur 1 gezeigten Beispiel ist der Saugkopf 5 der Stückguttransportvorrichtung 12 einem der im Bild vorderen Schranksegmente 6 zugewandt, um aus diesem Schranksegment 6 Kleinstückgut 13, das in Figur 5 nicht explizit dargestellt ist, entnehmen oder in diesem ablegen zu können.

Figur 6 zeigt schematisch die Ausführungsvariante des erfindungsgemäßen Regalsystems 1" aus Figur 5, wobei die Stückguttransportvorrichtung 12 durch die Horizontal- und Vertikalführung so bewegt wurde, dass sie sich oberhalb der Schranksegmente 6 befindet und damit frei entlang der Führungsbahn für die Schranksegmente 6 als auch quer und vertikal zu der Führungsbahn für die Schranksegmente 6 bewegbar ist.

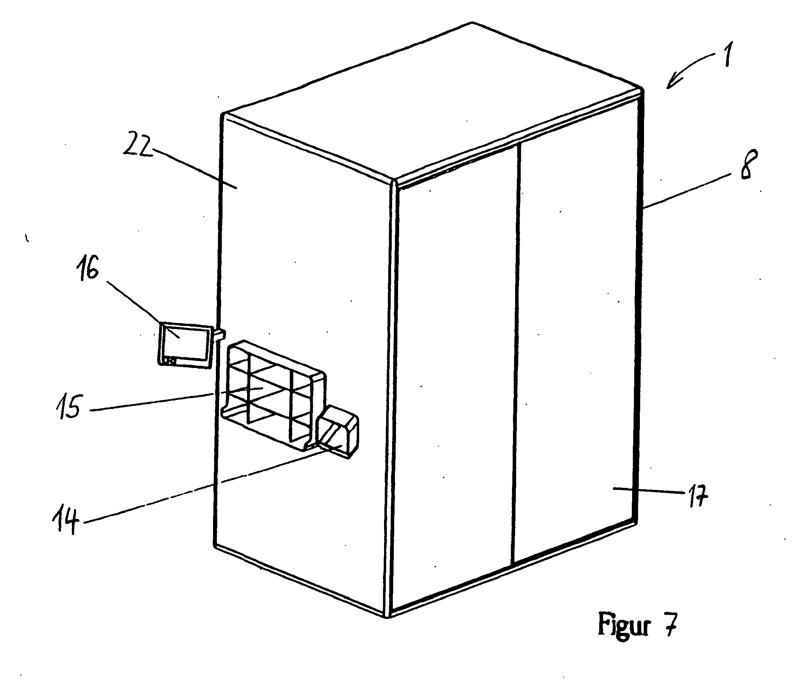

Figur 7 zeigt schematisch das erfindungsgemäße Regalsystem 1 in einer Ansicht von au-ßen. Das Regalsystem 1 weist eine Einhausung bzw. ein Gehäuse 8 mit wenigstens einer verschiebbaren Schranktür 5 auf. Das Gehäuse 8 des Regalsystems 1 kann auf der Rückseite und der Bodenfläche des Regalsystems 1 offen sein. Das Gehäuse 8 ist mit einem stabilen Metallprofilrahmen 21 verbunden.

In einem Seitenteil 22 des Regalsystems 1 ist eine Entnahmeöffnung 14 für Kleinstückgut 13 vorgesehen, das in Figur 7 nicht dargestellt ist. Auf der gleichen Seite des Regalsystems 1 wie die Entnahmeöffnung 14 ist in dem in Figur 7 gezeigten Beispiel eine Aufgabeöffnung 15 für Kleinstückgut 13 vorgesehen, über welche Kleinstückgut 13 in das Regalsystem 1 eingegeben werden kann, um es mit einer Stückguttransportvorrichtung 12 innerhalb des Regalsystems 1 einzuordnen. Die Aufgabeöffnung 15 kann jedoch auch an einer anderen Stelle als in Figur 7 gezeigt vorgesehen sein.

Des Weiteren ist an dem Regalsystem 1 in Figur 7 ein Bedienpanel 16 vorgesehen, mit welchem ein Nutzer des Regalsystems 1 Entnahme- bzw. Aufgabebefehle für bezüglich zu entnehmendem oder einzusortierendem Kleinstückgut 13 oder weitere relevante Daten das Regalsystem 1 eingeben kann.

Das Regalsystem 1 ist in seinen äußeren Abmaßen im Wesentlichen durch das Gehäuse 8 festgelegt. Das Regalsystem 1 befindet sich beispielsweise in einer Apotheke zur Aufbewahrung von Kleinstückgut 13 wie beispielsweise Medikamentenpackungen. Das Regalsystem 1 kann sich im Verkaufsraum einer Apotheke oder auch zweckmäßigerweise in einem Nebenraum eines Verkaufsraums einer Apotheke befinden. Befindet sich das Regalsystem 1 in einem Nebenraum, so ist das Regalsystem 1 mittels eines im Verkaufsraum der Apotheke nutzbaren Computers ansteuerbar. In diesem Fall befindet sich das Bedienpanel 16 nicht direkt an dem Regalsystem 1, wie in Figur 7 gezeigt, sondern beim Nutzer im Verkaufsraum der Apotheke.

Über den Computer im Verkaufsraum der Apotheke oder das Bedienpanel 16 kann eine Anforderung einer gewünschten Medikamentenverpackung 13 erfolgen, die durch Auslösen von Transport- und Identifikationsabläufen innerhalb des Regalsystems 1 realisiert wird.

An die Entnahmeöffnung 14 des Regalsystems 1 sind von außen in Figur 7 nicht dargestellte periphere Transporteinrichtungen zum Transport von aus dem Regalsystem 1 abgefordertem Kleinstückgut 13 in den Verkaufsraum vorgesehen.

Über die Aufgabeöffnung 15 kann das Regalsystem 1 mit neuem Kleinstückgut 13, wie zum Beispiel neuen Medikamentenpackungen, beschickt werden, wobei über das Bedienpanel 16 eine Zuordnung des Kleinstückgutes zu bestimmten Kategorien vorgenommen werden kann.

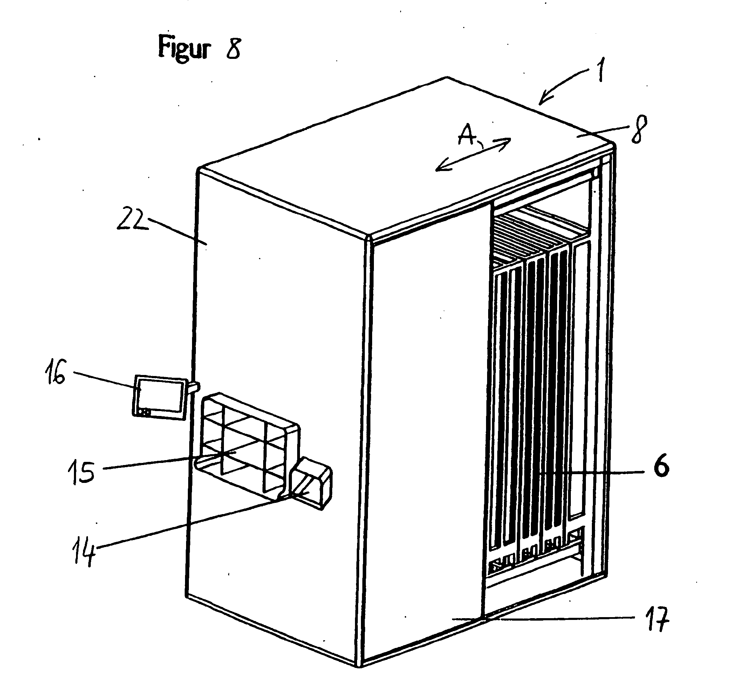

Figur 8 zeigt schematisch das Regalsystem 1 aus Figur 7, wobei eine Schiebetür 17 des Gehäuses 8 des Regalsystems 1 derart zur Seite geschoben ist, dass ein Teil des Inneren des Regalsystems 1 sichtbar ist. Im Inneren des Regalsystems 1 sind mehrere nebeneinander angeordnete Schranksegmente 6 vorgesehen, welche auf Führungsschienen 2, 2' entlang einer durch den Pfeil A gekennzeichneten Bewegungsrichtung verfahrbar sind.

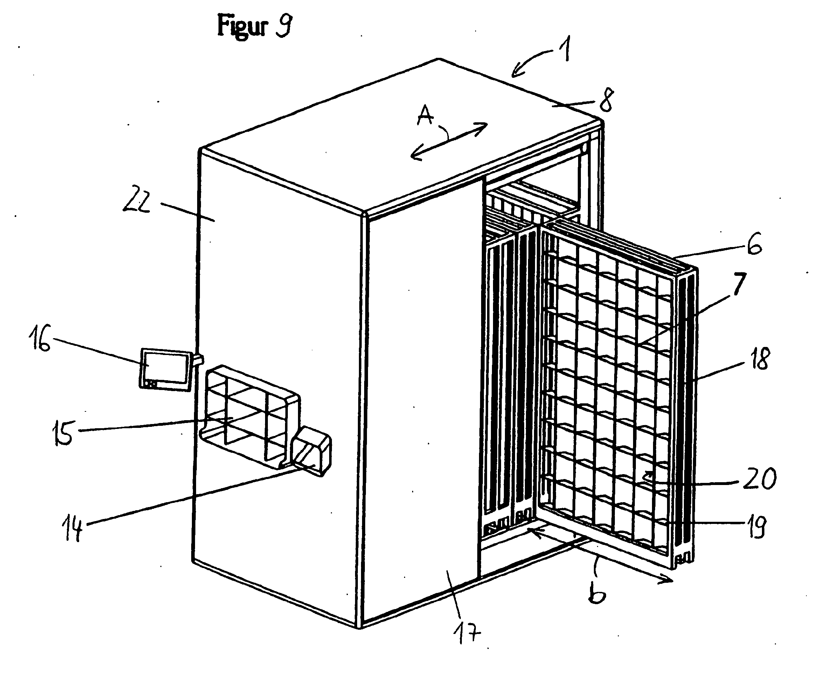

Figur 9 zeigt schematisch das Regalsystem 1 aus den Figuren 7 und 8, wobei eines der Schranksegmente 6 horizontal, quer zur Bewegungsrichtung A der Schranksegmente 6 aus dem Regalsystem 1 herausgezogen wurde. Die Herausziehbarkeit einzelner Schranksegmente 6 aus dem Regalsystem 1 dient im Wesentlichen der Notbedienung des Regalsystems 1. Indem eine Schiebetür 17 des Gehäuses 8 des Regalsystems 1 geöffnet wird, können einzelne Schranksegmente 6 quer zu ihrer seitlichen, sonst üblichen Verfahrbarkeit nach vom aus dem Regalsystem 1 herausgezogen werden. Per Notstromversorgung kann dabei dennoch computergestützt ein genauer Ablage- bzw. Entnahmeort für ein Kleinstückgut 13 ermittelt werden, woraufhin ein Nutzer des Regalsystems 1 das jeweilige Kleinstückgut 13 entnehmen oder ablegen kann. Bei einer Notbedienung ist das automatische Beschickungs- und Entnahmesystem mit der manipulierbaren Stückguttransportvorrichtung 12 außer Funktion, so dass es das Herausziehen der Schranksegmente 6 nicht behindert, da es sich in einem solchen Fall außerhalb oder hinter den Schranksegmenten 6 befindet.

Wie in Figur 9 ersichtlich ist, weist ein Schranksegment 6 eine Mehrzahl an Lagerfächern 7 auf. Die Schranksegmente 6 sind vorzugsweise so gestaltet, dass sie von beiden Seiten des Schranksegmentes 6 zugängliche Lagerfächer 7 aufweisen, zwischen welchen eine Trennwand 18 vorgesehen ist. Bis auf das erste Schranksegment 6, das der Entnahmeöffnung 14 und der Aufgabeöffnung 15 gegenüber ist, sind die Schranksegmente 6 vorzugsweise beidseitig bestückbar und weisen Tiefen von beispielsweise bis 200 mm bzw. 300 mm auf. Als seitlich äußerstes Schranksegment 6 wird vorzugsweise ein einseitig bestückbares Schranksegment 6 mit einer Tiefe von bis zu 250 mm genutzt. Es kann jedoch auch beidseitig bestückbar ausgestattet sein. Der wandernde Spalt 3 zwischen den seitlich verschiebbaren Schranksegmenten 6 ist an die freie Bewegbarkeit der Stückguttransportvorrichtung 12 zwischen den Schranksegmenten 6 angepasst.

Die Lagerfächer 7 sind so konzipiert, dass sie jeweils nur für die Aufnahme eines Kleinstückgutes 13 bzw. einer Medikamentenpackung vorgesehen sind. Die Lagerfächer 7 besitzen vorteilhafterweise unterschiedliche Größen und Tiefen, so dass sie an das einzulagernde Kleinstückgut 13 angepasst sind. Beispielsweise können Lagerfächer 7 mit einer Tiefe von 11 cm, 16 cm oder 24 cm vorgesehen werden.

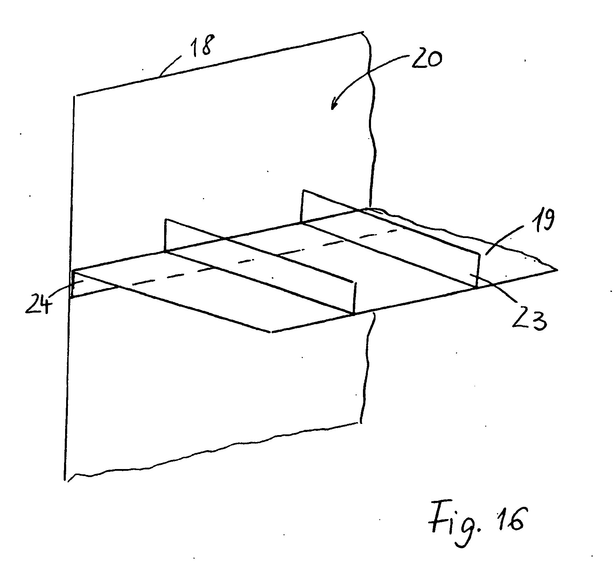

Die Lagerfächer 7 sind in dem in Figur 9 gezeigten Beispiel von vom nach hinten abfallend geneigt und aus sich im Wesentlichen über die Breite b eines Schranksegmentes 6 erstreckenden Fachböden 19 ausgebildet. Die Fachböden 19 können beispielsweise aus gefalzten Aluminiumböden, wie in Figur 16 gezeigt, ausgebildet sein. Die Fachböden 19 sind vorzugsweise durch Fachteiler 23 in einzelne Lagerfächer 7 aufgeteilt.

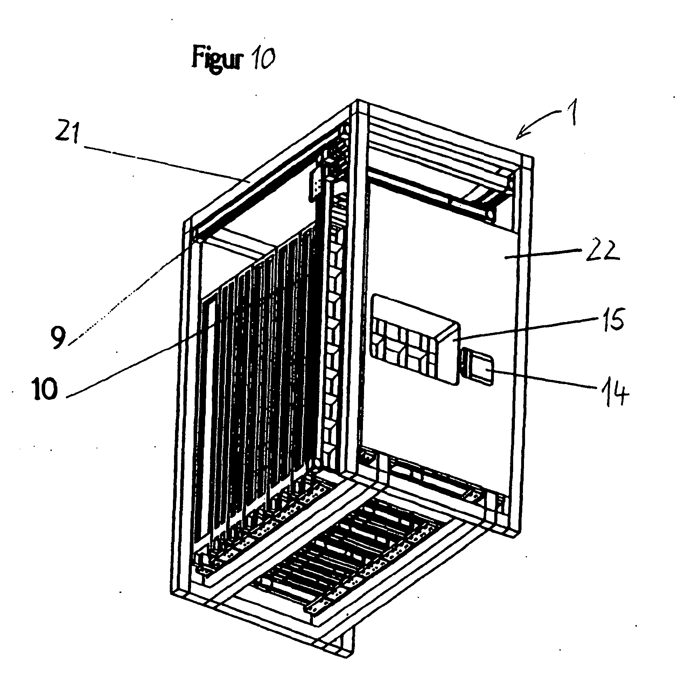

Figur 10 zeigt schematisch eine perspektivische Darstellung des Regalsystems 1 aus den Figuren 7 bis 9 ohne das Gehäuse 8, seitlich von hinten und unten gesehen. In der Darstellung von Figur 10 ist ein Metallprofilrahmen 21 für das Regalsystem 1 gezeigt, wobei an dem Metallprofilrahmen 21 die Horizontal- und Vertikalführung mit der Horizontalachse 9 und der Vertikalachse 10 für die Stückguttransportvorrichtung 12 befestigt ist.

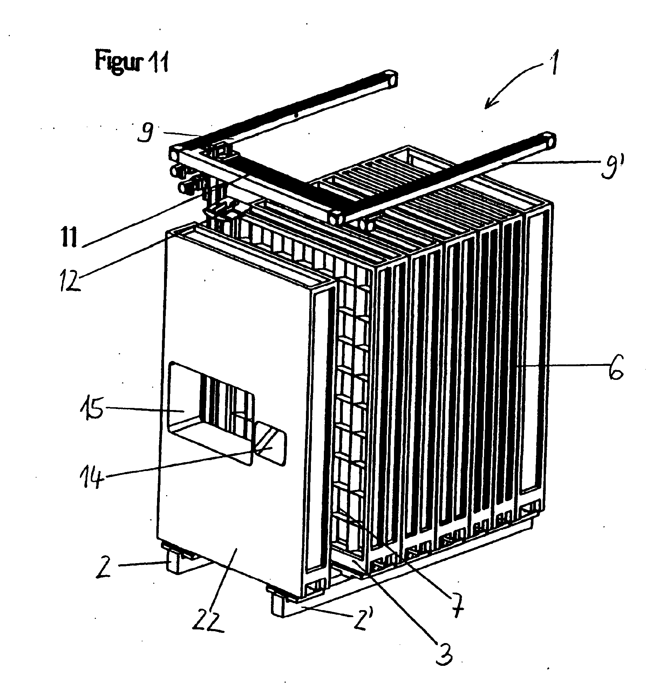

Figur 11 zeigt schematisch das Regalsystem 1 aus den Figuren 7 bis 10 ohne die Einhausung 8. Die in Figur 11 gezeigte Darstellung des Regalsystems 1 entspricht im Wesentlichen der schematischen Darstellung aus Figur 2, wobei vor den Schranksegmenten 6 noch das Seitenteil des Regalsystems 1 mit der Eingabeöffnung 15 und der Ausgabeöffnung 14 vorgesehen ist.

Im Gegensatz zu Figur 2 ist in dem in Figur 11 dargestellten Beispiel der Spalt 3 nicht zwischen zwei Schranksegmenten 6 sondern zwischen dem Seitenteil 22 des Regalsystems 1 und dem ersten der Schranksegmente 6 eingestellt. Damit kann die Stückguttransportvorrichtung 12 vor dem ersten der Schranksegmente 6 positioniert werden. In dem ersten der Schranksegmente 6 findet sich vorzugsweise das Kleinstückgut 13, welches am häufigsten von dem Nutzer des Regalsystems 1 abgefordert ist. Dies kann bei Medikamentenpackungen beispielsweise Aspirin oder dergleichen sein.

Vorzugsweise ist die in Figur 11 dargestellte Position der Schranksegmente 6, welche im Wesentlichen aneinandergeschoben sind, wobei ein Spalt 3 zwischen dem Seitenteil 22 und dem ersten der Schranksegmente 6 eingestellt ist, eine Standardeinstellung des Regalsystems 1, wodurch die Stückguttransportvorrichtung 12 relativ schnell an die Vorderseite des ersten Schranksegmentes 6 herangefahren werden kann, um daraus Kleinstückgut, wie Medikamentenpackungen, zu entnehmen oder darin einzulagern.

Nach einer Entnahme eines Kleinstückgutes 13, wie einer Medikamentenpackung, finden sich alle Schranksegmente 6 in einem geschlossenen Zustand, so dass genügend Platz zwischen dem ersten Schranksegment 6 und dem vorderen Seitenteil 22 mit den Aufgabe- und Entnahmeöffnungen 14, 15 zum Ein- und Ausfahren der Stückguttransportvorrichtung 12 vorhanden ist.

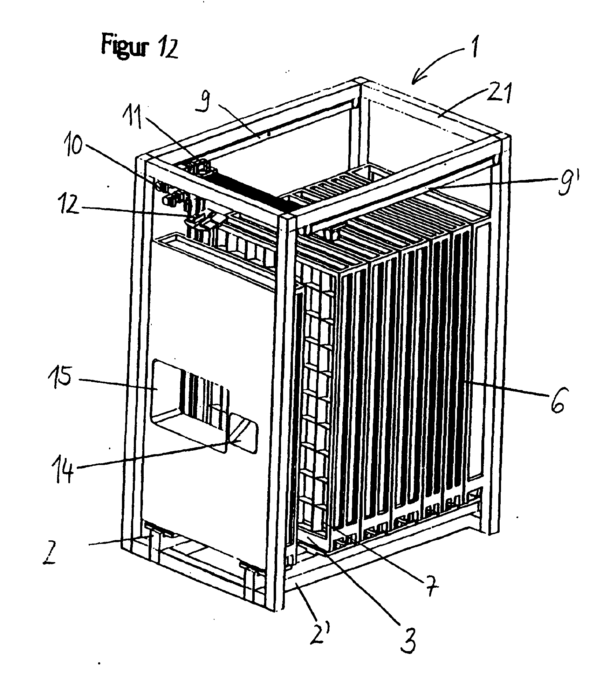

Figur 12 zeigt schematisch das Regalsystem 1 aus den Figuren 7 bis 11 ohne das Gehäuse 8 in einer perspektivischen Darstellung, seitlich von vorn und oben gesehen. Im Vergleich zu Figur 11 ist in Figur 12 zusätzlich der Metallprofilrahmen 21 dargestellt, welcher dem Regalsystem 1 in sich Stabilität verleiht. An den Längsträgern oben an dem Metallprofilrahmen 21 über den Schranksegmenten 6 befinden sich Führungsschienen zur Aufnahme der seitlich und motorisch verfahrbaren Quertraverse 11, an welcher wiederum ein Laufwagen mit der vertikalen Halteeinrichtung 10 befestigt ist, wobei an der vertikalen Halteeinrichtung 10 ein Laufwagen in Kombination mit der schwenk- und drehbaren Stückguttransportvorrichtung 12 vorhanden ist. Die schwenk- und drehbare Stückguttransportvorrichtung 12 ist mit Sensoren zur Positionsauffindung des in den Schranksegmenten 6 eingelagerten Kleinstückgutes 13, einschließlich der dort befindlichen Lagerfächer 7, und zur Identifizierung des Kleinstückgutes 13 ausgestattet.

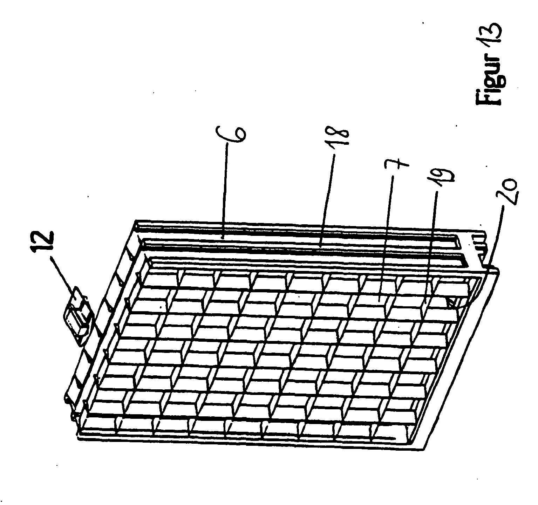

Figur 13 zeigt schematisch einen möglichen Grundaufbau eines Schranksegmentes 6 mit von der Seite zugänglichen Lagerfächern 7, welche von vorn nach hinten abfallend geneigt sind. In Figur 13 ist oberhalb des Schranksegmentes 6 die Stückguttransportvorrichtung 12 schematisch angedeutet.

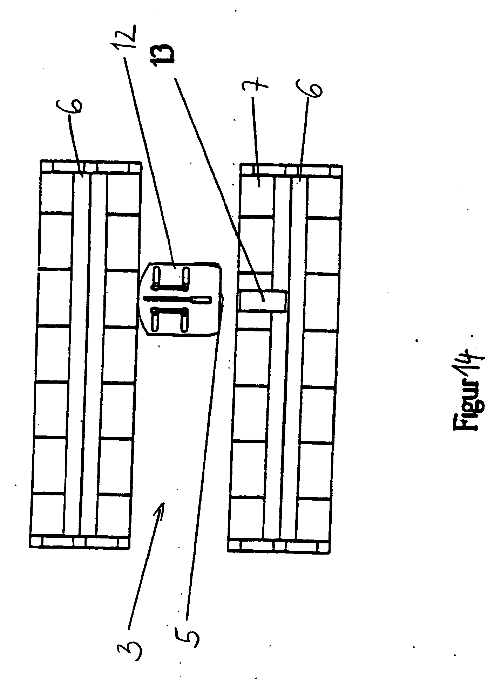

Figur 14 zeigt schematisch einen Ausschnitt des Regalsystems 1 aus den Figuren 7 bis 13 aus einer Sicht von oben, wobei in einem Spalt 3 zwischen zwei Schranksegmenten 6 die Stückguttransportvorrichtung 12 vorgesehen ist. Wie in Figur 14 gezeigt befindet sich in einem der Regalfächer 7 des unteren der Schranksegmente 6 Kleinstückgut 13 in Form einer Medikamentenpackung. Die Stückguttransportvorrichtung 12 ist in Figur 14 mit Hilfe der Horizontal- und Vertikalführung für die Stückguttransportvorrichtung 12 so vor dem Kleinstückgut 13 angeordnet, dass ihr Saugkopf 5 der Vorderseite des Kleinstückgutes 13 gegenüber ist. Auf diese Weise kann das Kleinstückgut 13 mit dem Saugkopf 5 der Stückguttransportvorrichtung 12 angesaugt und innerhalb des Regalsystems 1 transportiert werden.

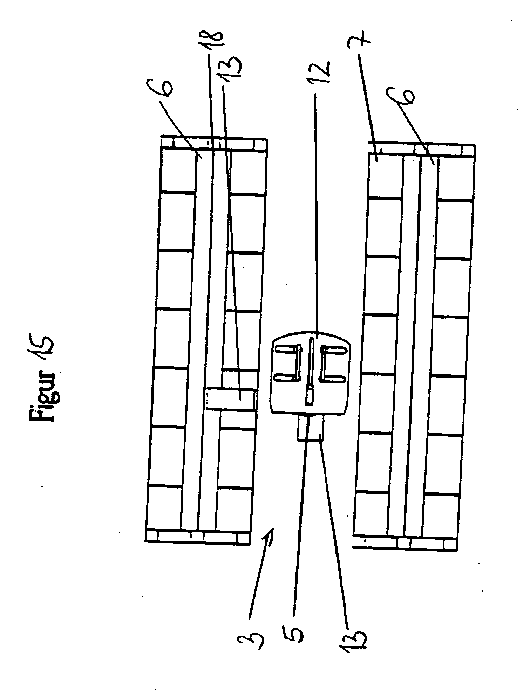

Figur 15 zeigt schematisch einen Ausschnitt aus dem Regalsystem 1 der Figuren 7 bis 14 in einer Ansicht von oben, wobei die Stückguttransportvorrichtung 12 in einem Spalt 3 zwischen zwei Schranksegmenten 6 in einer Transportsituation dargestellt ist, in welcher von dem Saugkopf 5 die Medikamentenpackung 13 angesaugt ist. In dem in Figur 15 gezeigten Beispiel ist die Stückguttransportvorrichtung 12 so ausgerichtet, dass sie zwischen den Schranksegmenten 6 so verfahren werden kann, dass sie sich aus dem Spalt 3 zwischen den Schranksegmenten 6 herausbewegen kann. Auf diese Weise kann das entnommene Kleinstückgut 13 beispielsweise zu der Entnahmeöffnung 14 des Regalsystems 1 mit der Stückguttransportvorrichtung 12 gebracht werden.

Figur 16 zeigt schematisch eine weitere mögliche Ausbildung eines Fachbodens 19, welcher durch Falzen eines Aluminiumbodens ausgebildet ist. Der in Figur 16 dargestellte Fachboden 19 ist hier nur bruchstückhaft dargestellt, um das Falz- und Klebeprinzip zur Ausbildung des Fachbodens 19 näher zu veranschaulichen.

Zur Herstellung des Fachbodens 19 wird eine Aluminiumplatte gefalzt, so dass eine Falz 24 entsteht. Mit der Falz 24 wird die Aluminiumplatte an eine an einem Schranksegment 6 vorgesehene Wand 18 so geklebt, dass die Falz 24 nach unten gerichtet ist. Damit wird oberhalb der Klebestelle durch die Wand 18 eine Fachrückwand 20 für den jeweiligen Fachboden 19 ausgebildet.

Die Breite jedes Lagerfachs 7 wird durch das Vorsehen von Fachteilern 23 auf dem Fachboden 19 definiert. Die Fachteiler 23 können mit dem Fachboden 19 verklebt oder verschweißt sein.

Die Fachteiler 23 bilden auf dem Fachboden 19 parallele Rippen aus, welche zur Formstabilisierung des Fachbodens 19 beitragen und zudem die Fachgröße der Lagerfächer 7 seitlich definieren.

Bezug nehmend auf die oben beschriebenen Figuren der Zeichnung wird im Folgenden ein Beispiel für das erfindungsgemäße Verfahren zur automatisierten Lagerung von Kleinstückgut 13 mit Hilfe des erfindungsgemäßen Regalsystems 1, 1' oder 1" beschrieben.

Ein Nutzer des Regalsystems 1, 1' oder 1", der aus dem Regalsystem 1, 1' oder 1" Kleinstückgut 13, wie zum Beispiel Medikamentenpackungen entnehmen möchte, gibt über das Bedienpanel 16 an dem Regalsystem 1, 1' oder 1" oder über einen mit dem Regalsystem 1, 1', 1" verbundenen Computer eine Kleinstückgutanforderung, beispielsweise in Form von bestimmten Tastenkombinationen, ein. Die eingegebenen Befehle werden über interne Datenleitungen in dem Regalsystem 1, 1', 1" an die Horizontal- und Vertikalführung für die Stückguttransportvorrichtung 12 sowie an die Führung für die Schranksegmente 6 weitergegeben.

Entsprechend der im Datensystem des Regalsystems 1, 1', 1" gespeicherten Position des abgeforderten Kleinstückgutes 13 werden die Schranksegmente 6 entlang der Führungsschienen 2, 2' so hin bzw. her bewegt, so dass zwischen dem Schranksegment 6, in welchem sich das abgeforderte Kleinstückgut 13 befindet, und dem benachbarten Schranksegment 6 ein Spalt 3 entsteht. Parallel dazu wird die Stückguttransportvorrichtung 12 durch die Horizontal- und Vertikalführung zunächst in der Bewegungsrichtung A der Schranksegmente 6 so bewegt, dass sie sich auf Höhe des Spaltes 3 befindet. Daraufhin wird die Stückguttransportvorrichtung 12 senkrecht zu der Bewegungsrichtung der Schranksegmente 6 in dem Spalt 3 bzw. vor dem jeweiligen Schranksegment 6, in dem sich das abgeforderte Kleinstückgut 13 befindet, positioniert. Die Stückguttransportvorrichtung 12 wird dabei so vor dem Lagerfach 7, in dem sich das abgeforderte Kleinstückgut 13 befindet, positioniert, dass der Saugkopf 5 der Stückguttransportvorrichtung 12 einer Vorderseite des abgeforderten Kleinstückgutes 13 gegenüber ist.

Die an der Stückguttransportvorrichtung 12 vorgesehene Sensorik identifiziert nun den Verpackungsinhalt, prüft die Haltbarkeitsdauer, misst die Größe des Kleinstückgutes 13 und/oder stellt den Bestand im Ablagefach 7 fest. Beispielsweise kann eine Packungsgröße einer in dem Lagerfach 7 abgelegten Medikamentenpackung über eine Lichtschranke ermittelt werden. Die seitliche Packungsgröße kann durch seitliche LED's erfasst werden. Über einen Ultraschallsensor kann die Höhe des eingelagerten Kleinstückgutes erfasst werden. Somit ist es möglich, anhand eines Plausibilitätstests, der bereits direkt an der Stückguttransportvorrichtung 12 vorgenommen werden kann, zu ermitteln, ob das in dem Lagerfach 7 befindliche Kleinstückgut 13 dem abgeforderten Kleinstückgut 13 entspricht. Wird beispielsweise bei dem Plausibilitätstest ermittelt, dass anhand der festgestellten Packungsgröße ermittelbar ist, dass das eingelagerte Kleinstückgut nicht das abgeforderte Kleinstückgut 13 sein kann, kann eine Fehlermeldung ausgegeben werden oder ein Auswurf des falsch eingelagerten Kleinstückgutes erfolgen.

Im Folgenden fährt die Stückguttransportvorrichtung 12 so an das abgeforderte Kleinstückgut 13 heran, dass es durch den Druck der Stückguttransportvorrichtung 12 an die Lagerfachrückwand 20 des Lagerfaches 7 geschoben wird. Dann saugt der Saugkopf 5 das Kleinstückgut an, ohne dass ein seitliches Ergreifen des Kleinstückgutes 13 erfolgt. Das Kleinstückgut 13 wird allein durch die Saugwirkung der Stückguttransportvorrichtung 12 aus dem Lagerfach 7 entnommen und im Folgenden innerhalb des Regalsystems 1, 1', 1" durch die Stückguttransportvorrichtung 12 transportiert. Hierfür ist die Stückguttransportvorrichtung 12 in der Lage, sich über ihre Rotationsachse 4 um wenigstens 180° zu drehen, so dass das abgeforderte Kleinstückgut auf kürzestem Weg zu der Entnahmeöffnung 14 des Regalsystems 1, 1', 1" transportiert werden kann. Hierfür bewegt sich die Stückguttransportvorrichtung 12 aus dem Spalt 3 heraus und fährt beispielsweise oberhalb oder seitlich der Schranksegmente 6 zu der Entnahmeöffnung 14 des Regalsystems 1, 1', 1" zurück.

Von der Entnahmeöffnung 14 kann das entnommene Kleinstückgut 13 weiter, beispielsweise in einen Verkaufsraum gefördert werden.

Auf ähnliche Weise wird verfahren, wenn Kleinstückgut 13 in dem Regalsystem 1, 1', 1" eingelagert werden soll. Hierfür wird Kleinstückgut 13 in der Aufgabeöffnung 15 des Regalsystems 1, 1', 1" eingelegt. Über das Bedienpanel 16 oder einen in einem Nachbarraum befindlichen Computer wird dem Regalsystem 1, 1', 1" vorgegeben, das jeweilige Kleinstückgut 13 in dem Regalsystem 1, 1', 1" einzusortieren. Sind beispielsweise Medikamentenpackungen einzusortieren, können diese in willkürlicher Verpackungsgröße und willkürlichem Verpackungsinhalt über die Aufgabeöffnung 15, beispielsweise an der Schmalseite 22 des Regalsystems 1, 1', 1" zur Einsortierung aufgegeben werden.

An der Stückguttransportvorrichtung 12 sind Sensoren vorgesehen, mit deren Hilfe die Größe und/oder die Lage und/oder Identifikationsdaten des einzusortierenden Kleinstückgutes 13 erfasst werden können. Aus diesen Daten und den vorgegebenen Eingabebefehlen bestimmt das Regalsystem 1, 1', 1" automatisch, wo das jeweilige Kleinstückgut 13 innerhalb des Regalsystems 1, 1', 1" abzulegen ist. So können beispielsweise durch die Sensoren der Stückguttransportvorrichtung 12 solche Kriterien wie die Verpackungsgröße, der Verpackungsinhalt, das Haltbarkeitsdatum oder weitere Kriterien für die Ablage des Kleinstückgutes 13 erfasst und das Kleinstückgut 13 entsprechend der erfassten Kriterien abgelegt werden.

Die dreidimensional bewegliche Stückguttransportvorrichtung 12 fährt computergesteuert, geführt durch die Horizontal- und Vertikalführung an die Aufgabeöffnung 15 und entnimmt von der Aufgabeöffnung 15 pro Transportvorgang jeweils ein Kleinstückgut 13. Parallel dazu wird zwischen dem Schranksegment 6, in welchem das Kleinstückgut 13 einzuordnen ist, und dem gegenüberliegenden Schranksegment 6 ein Spalt 3 eingestellt, in dem sich die Schranksegmente 6 auf den Führungsschienen 2, 2' automatisch bewegen.

Daraufhin fährt die Stückguttransportvorrichtung 12 mit dem einzusortierenden Kleinstückgut 13, geführt durch die Horizontal- und Vertikalführung für die Stückguttransportvorrichtung 12 in dem eingestellten Spalt 3 vor das Lagerfach 7, in dem das Kleinstückgut 13 abgelegt werden soll. Die Stückguttransportvorrichtung 12 fährt dabei so nahe an das Lagerfach 7 heran, dass das Kleinstückgut 13 sicher darin abgelegt werden kann. Daraufhin wird die Saugwirkung der Vakuumansaugung des Saugkopfes 5 abgestellt, und das Kleinstückgut 13 in dem Lagerfach 7 abgelegt. Durch die von vom nach hinten geneigte Ausbildung des Lagerfaches 7 kann das Kleinstückgut 13 sicher in dem Lagerfach 7 aufgenommen werden und bereits beim Ablegen etwas nach hinten rutschen, so dass es sicher in dem Lagerfach 7 aufbewahrt wird.

Die Stückguttransportvorrichtung 12 fährt daraufhin wieder zu der Aufgabeöffnung 15 und entnimmt das nächste einzulagernde Kleinstückgut 13, woraufhin sich die oben beschriebene Schrittfolge zum Einsortieren des einzusortierenden Kleinstückgutes 13 wiederholt, bis sämtliches einzulagerndes Kleinstückgut 13 durch die Stückguttransportvorrichtung 12 von der Aufgabeöffnung 15 abgeholt worden ist.

Zur Bedienung des kompakten Regalsystems 1, 1', 1" bei Energieausfall kann wenigstens eine Schiebetür 17 oder weitere Abdeckungen der Frontseiten des Regalsystems 1, 1', 1" gegeneinander verschoben werden, um den Zugang zu den einzelnen Schranksegmenten 6 zu ermöglichen. Dabei ist es möglich, einzelne Schranksegmente 6, wie auch in Figur 9 gezeigt, aus dem kompakten Regalsystem 1, 1', 1" quer zur seitlichen Verfahrbarkeit der Schranksegmente 6 nach vom herauszuziehen, so dass dadurch ein manueller Zugriff zu einem manuell abgelegten Kleinstückgut 13 ermöglichst wird. Über eine Notstromversorgung, mit der zumindest die Ablageposition eines abgelegten Kleinstückgutes 13 per Computer ermittelt werden kann und auch freie Plätze zur Einsortierung neuer Ware erkannt werden können, wird die Nutzbarkeit des kompakten Regalsystems 1, 1', 1" in kurzzeitig funktionell eingeschränkter Weise aufrecht erhalten.

Mit der computergesteuerten Sortierung und Lagerverwaltung, welche mit dem erfindungsgemäßen Regalsystem und dem zugehörigen Verfahren möglich ist, ergeben sich eine Reihe von Vorteilen. Das einzulagernde Kleinstückgut 13 kann platzoptimiert chaotisch gelagert werden. Das heißt, eine Sortierung des einzulagernden Kleinstückgutes 13 kann entsprechend der besten raumsparenden Aufteilung nach Größe des einzulagernden Kleinstückgutes 13 erfolgen.

Zudem ist ein genaues Lagercontrolling und eine Optimierung des Inventars hinsichtlich der Lagermengenzählung, der Messung der Lagerdauer (z. B. bei verderblicher Ware wie Medikamenten) und des Lagerumschlags pro Produkt für die Optimierung der Lagerverfügbarkeit und damit die Reduzierung des Inventars möglich. Der Bestand kann automatisch kontrolliert werden, wobei bei Erreichen eines Minimalbestandes eine Hinweisfunktion ausgegeben werden kann. Zudem kann der Lagerbestand rechtzeitig vor einem Verfall des eingelagerten Kleinstückgutes 13 verändert, beispielsweise beim Großhandel eingetauscht, werden.

Das erfindungsgemäße Regalsystem und das zugehörige Verfahren ermöglichen einen schnellen und sicheren Zugriff auf das eingelagerte Kleinstückgut 13 bei hoher Lagervielfalt von Produkten. Es eignet sich insbesondere für die Verwendung in Apotheken, wo typischerweise ca. 2.000 verschiedene Produkte auf Lager gehalten werden. Grundsätzlich kann das erfindungsgemäße Regalsystem und das zugehörige Verfahren auch in anderen Bereichen zur Einlagerung von Kleinprodukten mit hohem Wert pro Volumen Anwendung finden. Mögliche Anwendungsgebiete ergeben sich im Maschinen- und Anlagenbau, der Elektrotechnik, der Einzelteilaufbewahrung von Werkzeugen, hochwertigen Kleinteilen, Messmitteln und dergleichen. In Abhängigkeit von dem einzulagernden Kleinstückgut 13 ist die Stückguttransportvorrichtung 12 anpassbar, so dass die Stückguttransportvorrichtung 12 neben dem Saugkopf 5 auch mit einer Greifvorrichtung oder Hakenelementen ausgestattet sein kann.

Die erfindungsgemäße Lösung kann auch für Regalsysteme und Einlagerungsverfahren in Juwelierläden oder Mobilfunkläden eingesetzt werden, wo eine erhöhte Sicherheitsstufe für das einzulagernde Kleinstückgut erforderlich ist. Somit kann durch die computergesteuerte Einlagerung und Ausgabe durch Eingabe bestimmter Codierungen genau festgelegt werden, wer welches Kleinstückgut 13 entnehmen darf, oder es kann im Nachhinein festgestellt werden, wer welches Kleinstückgut 13 entnommen hat. Dieses Prinzip ist auch für eine Anwendung bei vollautomatischen Tankstellen zur Selbstbedienung denkbar.

Das erfindungsgemäße Regalsystem und das zugehörige Verfahren ermöglichen ebenfalls eine Notbedienbarkeit, da das Regalsystem 1, 1', 1" in sich leicht bedienbar ist und die jeweiligen Lagerplätze für das Kleinstückgut 13 logisch identifizierbar sind.

Mit Hilfe des erfindungsgemäßen Regalsystems und des zugehörigen Verfahrens kann einem Anwender eine sehr flexible Lagergestaltung ermöglicht werden. Die Lagerplatzkapazitäten sind zudem veränderbar, um sie exakt den einzelnen Platzbedürfnissen anpassen zu können. Somit kann beispielsweise für eine Apotheke eine flexible Lagermöglichkeit geschaffen werden, die auf die Größe, die Anzahl und die Besonderheiten der Lagerobjekte optimiert ist. Diese Flexibilität erlaubt es auch, dass das erfindungsgemäße Regalsystem 1, 1', 1" nach Inbetriebnahme jederzeit durch einen Servicetechniker an veränderte Bedingungen, beispielsweise über eine neue Aufteilung der Ablagefächer 7, angepasst werden kann.

## Patentansprüche

1. Regalsystem (1, 1', 1") zur automatisierten Lagerung von Kleinstückgut (13), mit:
- mehreren Schranksegmenten (6), wobei die Schranksegmente (6) nebeneinander entlang einer sich in einer Bewegungsrichtung (A) für die Schranksegmente (6) erstreckenden Führung für die Schranksegmente (6) angeordnet und unabhängig voneinander in der Bewegungsrichtung (A) durch die Führung hin- und herverschiebbar gelagert sind, sodass wenigstens zwischen zwei nebeneinander angeordneten Schranksegmenten (6) oder zwischen einem Seitenteil (22) des Regalsystems (1,1', 1") und einem benachbarten Schranksegment (6) ein Spalt (3) einstellbar ist;
- einer elektromotorisch angetriebenen Horizontal- und Vertikalführung, die ein Achssystem aufweist; und
- einer Stückguttransportvorrichtung (12), mit welcher das Kleinstückgut (13) in den Schranksegmenten (6) ablegbar und aus den Schranksegmenten (6) entnehmbar ist, wobei die Stückguttransportvorrichtung (12) über die Horizontal- und Vertikalführung vor wenigstens einem der Schranksegmente (6) positionierbar ist, und wobei die Stückguttransportvorrichtung (12) durch die Horizontal- und Vertikalführung in der Bewegungsrichtung (A) der Schranksegmente (6) sowie in zwei weiteren Bewegungsrichtungen senkrecht zu der Bewegungsrichtung (A) der Schranksegmente (6), unabhängig von den Schranksegmenten (6) aber dennoch immer in Relation zu den Schranksegmenten (6) frei in dem kartesischen System des Regalsystems (1, 1', 1") bewegbar und dadurch in dem Spalt (3) positionierbar ist,
wobei die Horizontal- und Vertikalführung für die Stückguttransportvorrichtung (12) und die Führung für die Schranksegmente (6) voneinander entkoppelt sind, und wobei die Stückguttransportvorrichtung (12) ein Beschickungs- und Entnahmeroboter ist,
**dadurch gekennzeichnet,**
**dass** die Stückguttransportvorrichtung (12) eine vertikale Rotationsachse (4) aufweist und die Stückguttransportvorrichtung (12) um ihre eigene Rotationsachse (4) um wenigstens 180° schwenkbar ist und Schwenk- und translatorische Bewegungen ausführen kann,
und **dass** entweder
- das Achssystem eine vertikale Achse (10), zwei horizontale Achsen (9, 9') in Bewegungsrichtung (A) der Schranksegmente (6) und eine dritte horizontale Achse (11) quer zur Bewegungsrichtung (A) der Schranksegmente (6), welche die beiden in Bewegungsrichtung (A) der Schranksegmente (6) verlaufenden horizontalen Achsen (9, 9') miteinander verbindet, aufweist, wobei die vertikale Achse (10) beweglich mit der seitlich und motorisch verfahrbaren dritten horizontalen Achse (11) verbunden ist, sodass die vertikale Achse (10) mit der Stückguttransportvorrichtung (12) entlang der dritten horizontalen Achse (11) in dem Spalt (3) hin- und herbewegbar ist sowie in den Spalt (3) hineinfahrbar und aus diesem herausfahrbar ist, und wobei die Stückguttransportvorrichtung (12) entlang der vertikalen Achse (10) aus dem Spalt (3) nach oben herausfahrbar ist und oberhalb der Schranksegmente (6) anordenbar und von dem Spalt (3) wegfahrbar ist; oder
- das Achssystem eine vertikale Achse (10), zwei horizontale Achsen (9, 9") in Bewegungsrichtung (A) der Schranksegmente (6) und eine dritte horizontale Achse (11) quer zur Bewegungsrichtung (A) der Schranksegmente (6), wobei die vertikale Achse (10) die beiden in Bewegungsrichtung (A) der Schranksegmente (6) verlaufenden horizontalen Achsen (9, 9") miteinander verbindet, aufweist, wobei die dritte horizontale Achse (11) seitlich in das Regalsystem (1') hineinragbar und in dem Spalt (3) zwischen den Schranksegmenten (6) mit der Stückguttransportvorrichtung (12) positionierbar ist und wobei die Stückguttransportvorrichtung (12) entlang der dritten horizontalen Achse (11) verfahrbar und durch die das Achssystem aufweisende Horizontal- und Vertikalführung frei oberhalb der Schranksegmente (6) beweglich ist; oder
- das Achssystem eine erste und eine zweite vertikale Achse (10, 10'), eine erste und eine zweite horizontale Achse (9", 9'") in Bewegungsrichtung (A) der Schranksegmente (6) und eine quer zur Bewegungsrichtung (A) der Schranksegmente (6) verlaufende dritte horizontale Achse (11), die die erste und zweite vertikale Achse (10, 10') miteinander verbindet, aufweist, wobei die erste vertikale Achse (10) durch die erste horizontale Achse (9") und die zweite vertikale Achse (10') durch die zweite horizontale Achse (9"') geführt werden, wobei die Stückguttransportvorrichtung (12) entlang der dritten horizontalen Achse (11) verfahrbar und durch die das Achssystem aufweisende Horizontal- und Vertikalführung frei entlang der Führungsbahn für die Schranksegmente (6) als auch quer und vertikal zu der Führungsbahn für die Schranksegmente (6) bewegbar ist.

2. Regalsystem nach Anspruch 1, **dadurch gekennzeichnet, dass** die Schranksegmente (6) durch horizontale Führungsschienen (2, 2') geführt sind.

3. Regalsystem nach einem der vorhergehenden Ansprüche, **dadurch gekennzeichnet, dass** die Schranksegmente (6) Lagerfächer (7) mit einer durch eine Lagerfachrückwand (20) bestimmten Tiefe (t) aufweisen, und die Lagerfächer (7) zur Aufnahme jeweils nur eines Kleinstückguts (13) ausgebildet sind.

4. Regalsystem nach Anspruch 3, **dadurch gekennzeichnet, dass** die Lagerfächer (7) aus gefalzten Aluminiumböden ausgebildet sind.

5. Regalsystem nach Anspruch 3 oder 4, **dadurch gekennzeichnet, dass** die Lagerfächer (7) von vom nach hinten abfallend geneigt sind.

6. Regalsystem nach einem der vorhergehenden Ansprüche, **dadurch gekennzeichnet, dass** die Stürkguttransportvorrichtung (12) einen vor- und zurückfahrbaren Saugkopf (5) und keine seitlichen Greifelemente aufweist.

7. Regalsystem nach einem der vorhergehenden Ansprüche, **dadurch gekennzeichnet, dass** an der Stückguttransportvorrichtung (12) Sensoren zur Erfassung der Größe und/oder der Lage und/oder von Identifikationsdaten des zu transportierenden Kleinstückgutes (13) vorgesehen sind.

8. Regalsystem nach einem der vorhergehenden Ansprüche, **dadurch gekennzeichnet, dass** die Schranksegmente (6) unabhängig voneinander horizontal, senkrecht zu der durch ihre Führung definierten Bewegungsrichtung (A) der Schranksegmente (6) herausziehbar sind.

9. Verfahren zur automatisierten Lagerung von Kleinstückgut (13), mit einem Regalsystem (1, 1', 1") mit mehreren Schranksegmenten (6), wobei
- wenigstens eines der Schranksegmente (6) entlang einer Bewegungsrichtung (A) über eine Führung so verschoben wird, dass wenigstens zwischen zwei nebeneinander angeordneten Schranksegmenten (6) oder zwischen einer Seitenwand (22) des Regalsystems (1, 1', 1") und einem benachbarten Schranksegment (6) ein Spalt (3) entsteht,
- das Kleinstückgut (13) mit einer Stückguttransportvorrichtung (12) in den Schranksegmenten (6) abgelegt und aus den Schranksegmenten (6) entnommen wird, und
- die Stückguttransportvorrichtung (12) über eine elektromotorisch angetriebene Horizontal- und Vertikalführung, die ein Achssystem aufweist, vor wenigstens einem der Schranksegmente (6) positioniert wird, wobei die Stückguttransportvorrichtung (12) unabhängig von den Schranksegmenten (6) aber dennoch immer frei in Relation zu den Schranksegmenten (6) frei in dem kartesischen System des Regalsystems (1) durch die von der Führung für die Schranksegmente (6) entkoppelte Horizontal- und Vertikalführung in der Bewegungsrichtung (A) der Schranksegmente (6) so bewegt wird, dass sie sich auf Höhe des Spaltes (3) befindet, die Stückguttransportvorrichtung (12) daraufhin senkrecht zu der Bewegungsrichtung (A) der Schranksegmente (6) in dem Spalt (3) positioniert wird und die Stückguttransportvorrichtung (12) ein Beschickungs- und Entnahmeroboter ist
**dadurch gekennzeichnet,**
**dass** die Horizontal- und Vertikalführung durch das Achssystem realisiert wird, welches entweder
- eine vertikale Achse (10), zwei horizontale Achsen (9, 9') in Bewegungsrichtung (A) der Schranksegmente (6) und eine dritte horizontale Achse (11) quer zur Bewegungsrichtung (A) der Schranksegmente (6), welche die beiden in Bewegungsrichtung (A) der Schranksegmente (6) verlaufenden horizontalen Achsen (9, 9') miteinander verbindet, aufweist, wobei die vertikale Achse (10) beweglich mit der seitlich und motorisch verfahrbaren dritten horizontalen Achse (11) verbunden ist, sodass die vertikale Achse (10) mit der Stückguttransportvorrichtung (12) entlang der dritten horizontalen Achse (11) in dem Spalt (3) hin- und herbewegbar ist sowie in den Spalt (3) hineinfahrbar und aus diesem herausfahrbar ist, und wobei die Stückguttransportvorrichtung (12) entlang der vertikalen Achse (10) aus dem Spalt (3) nach oben herausfahrbar ist und oberhalb der Schranksegmente (6) anordenbar und von dem Spalt (3) wegfahrbar ist; oder
- eine vertikale Achse (10), zwei horizontale Achsen (9, 9") in Bewegungsrichtung (A) der Schranksegmente (6) und eine dritte horizontale Achse (11) quer zur Bewegungsrichtung (A) der Schranksegmente (6), wobei die vertikale Achse (11) die beiden in Bewegungsrichtung (A) der Schranksegmente (6) verlaufenden horizontalen Achsen (9, 9") miteinander verbindet, aufweist, wobei die dritte horizontale Achse (11) seitlich in das Regalsystem (1') hineinragbar und in dem Spalt (3) zwischen den Schranksegmenten (6) mit der Stückguttransportvorrichtung (12) positionierbar ist und wobei die Stückguttransportvorrichtung (12) entlang der dritten horizontalen Achse (11) verfahrbar und durch die das Achssystem aufweisende Horizontal- und Vertikalführung frei oberhalb der Schranksegmente (6) beweglich ist; oder
- eine erste und eine zweite vertikale Achse (10, 10'), eine erste und eine zweite horizontale Achse (9", 9'") in Bewegungsrichtung (A) der Schranksegmente (6) und eine quer zur Bewegungsrichtung (A) der Schranksegmente (6) verlaufende dritte horizontale Achse (11), die die erste und zweite vertikale Achse (10, 10') miteinander verbindet, aufweist, wobei die erste vertikale Achse (10) durch die erste horizontale Achse (9") und die zweite vertikale Achse (10') durch die zweite horizontale Achse (9'") geführt werden, wobei die Stückguttransportvorrichtung (12) entlang der dritten horizontalen Achse (11) verfahrbar und durch die das Achssystem aufweisende Horizontal- und Vertikalführung frei entlang der Führungsbahn für die Schranksegmente (6) als auch quer und vertikal zu der Führungsbahn für die Schranksegmente (6) bewegbar ist,
- wobei die Stückguttransportvorrichtung (12) Schwenk- und translatorische Bewegungen ausführt und zur Ablage oder Entnahme von Kleinstückgut (13) um wenigstens 180° schwenkbar um ihre eigene Rotationsachse (4) bewegt wird.

10. Verfahren nach Anspruch 9, **dadurch gekennzeichnet, dass** die Schranksegmente (6) entlang horizontaler Führungsschienen (2, 2') verschoben werden.

11. Verfahren nach Anspruch 9 oder 10, **dadurch gekennzeichnet, dass** die Stückguttransportvorrichtung (12) beim Entnehmen des Kleinstückgutes (13) aus einem Lagerfach (7) eines Schranksegmentes (6) so weit in das Lagerfach (7) hineinfahrt, dass das zu entnehmende Kleinstückgut (13) an einer Rückwand (20) des Lagerfaches (7) anstößt, und dass das Kleinstückgut (13) von einem Ansaugkopf (5) der Stückguttransportvorrichtung (12) angesaugt und aus dem Lagerfach (7) entnommen wird, ohne dass das Kleinstückgut (13) seitlich durch die Stückguttransportvorrichtung (12) ergriffen wird.

12. Verfahren nach einem der Ansprüche 9 bis 11, **dadurch gekennzeichnet, dass** die Größe und/oder die Lage und/oder Identifikationsdaten des zu transportierenden Kleinstückgutes (13) mit an der Stückguttransportvorrichtung (12) vorgesehenen Sensoren erfasst werden.

## Claims

1. Rack system (1, 1', 1 ") for the automated storage of small articles (13), having:
- a plurality of cabinet segments (6), wherein the cabinet segments (6) are arranged alongside one another along a guide for the cabinet segments (6), said guide extending in a movement direction (A) for the cabinet segments (6), and are mounted so as to be displaceable to and fro independently of one another in the movement direction (A) by the guide, such that a gap (3) is settable at least between two cabinet segments (6) arranged alongside one another or between a side part (22) of the rack system (1, 1', 1") and an adjacent cabinet segment (6);
- a horizontal and vertical guide which is driven by an electric motor and has a shaft system; and
- an article transporting apparatus (12), by way of which the small articles (13) are depositable in the cabinet segments (6) and removable from the cabinet segments (6), wherein the article transporting apparatus (12) is positionable via the horizontal and vertical guide in front of at least one of the cabinet segments (6), and wherein the article transporting apparatus (12) is movable freely in the Cartesian system of the rack system (1, 1', 1") by the horizontal and vertical guide in the movement direction (A) of the cabinet segments (6) and also in two further movement directions perpendicular to the movement direction (A) of the cabinet segments (6), independently of the cabinet segments (6) but nevertheless still in relation to the cabinet segments (6), and as a result is positionable in the gap (3),
wherein the horizontal and vertical guide for the article transporting apparatus (12) and the guide for the cabinet segments (6) are decoupled from one another, and wherein the article transporting apparatus (12) is a charging and removal robot,
**characterized in that**
the article transporting apparatus (12) has a vertical rotation axis (4) and the article transporting apparatus (12) is pivotable through at least 180° about its own rotation axis (4) and can execute pivoting and translatory movements,
and **in that** either
- the shaft system has a vertical shaft (10), two horizontal shafts (9, 9') in the movement direction (A) of the cabinet segments (6) and a third horizontal shaft (11) transversely to the movement direction (A) of the cabinet segments (6), said third horizontal shaft (11) connecting together the two horizontal shafts (9, 9') extending in the movement direction (A) of the cabinet segments (6), wherein the vertical shaft (10) is connected in a movable manner to the third horizontal shaft (11), which is displaceable laterally by a motor, such that the vertical shaft (10) is movable to and fro along the third horizontal shaft (11) in the gap (3) with the article transporting apparatus (12) and can be moved into the gap (3) and out of the latter, and wherein the article transporting apparatus (12) can be moved upwardly out of the gap (3) along the vertical shaft (10) and is arrangeable above the cabinet segments (6) and movable away from the gap (3); or
- the shaft system has a vertical shaft (10), two horizontal shafts (9, 9") in the movement direction (A) of the cabinet segments (6) and a third horizontal shaft (11) transversely to the movement direction (A) of the cabinet segments (6), wherein the vertical shaft (10) connects together the two horizontal shafts (9, 9") extending in the movement direction (A) of the cabinet segments (6), wherein the third horizontal shaft (11) can project laterally into the rack system (1') and is positionable in the gap (3) between the cabinet segments (6) with the article transporting apparatus (12), and wherein the article transporting apparatus (12) is displaceable along the third horizontal shaft (11) and is movable freely above the cabinet segments (6) by the horizontal and vertical guide having the shaft system; or
- the shaft system has a first and a second vertical shaft (10, 10'), a first and a second horizontal shaft (9", 9"') in the movement direction (A) of the cabinet segments (6) and a third horizontal shaft (11) extending transversely to the movement direction (A) of the cabinet segments (6), said third horizontal shaft (11) connecting the first and second vertical shafts (10, 10') together, wherein the first vertical shaft (10) is guided by the first horizontal shaft (9") and the second vertical shaft (10') is guided by the second horizontal shaft (9"'), wherein the article transporting apparatus (12) is displaced along the third horizontal shaft (11) and is movable freely along the guide track for the cabinet segments (6) and also transversely and vertically with respect to the guide track for the cabinet segments (6) by the horizontal and vertical guide having the shaft system.

2. Rack system according to claim 1, **characterized in that** the cabinet segments (6) are guided by horizontal guide rails (2, 2').

3. Rack system according to either of the preceding claims, **characterized in that** the cabinet segments (6) have storage compartments (7) having a depth (t) determined by a storage compartment rear wall (20), and the storage compartments (7) are designed to hold in each case only one small article (13).

4. Rack system according to claim 3, **characterized in that** the storage compartments (7) are formed from folded aluminium shelves.

5. Rack system according to claim 3 or 4, **characterized in that** the storage compartments (7) are inclined in a manner dropping from front to rear.

6. Rack system according to one of the preceding claims, **characterized in that** the article transporting apparatus (12) has a suction head (5) that can be moved back and forth and no lateral gripping elements.

7. Rack system according to one of the preceding claims, **characterized in that** sensors for sensing the size and/or the position and/or identification data of the small articles (13) to be transported are provided on the article transporting apparatus (12).

8. Rack system according to one of the preceding claims, **characterized in that** the cabinet segments (6) can be pulled out independently of one another horizontally, perpendicularly to the movement direction (A), defined by their guide, of the cabinet segments (6).

9. Method for the automated storage of small articles (13), having a rack system (1, 1', 1 ") having a plurality of cabinet segments (6), wherein
- at least one of the cabinet segments (6) is moved in a movement direction (A) via a guide such that a gap (3) is produced at least between two cabinet segments (6) arranged alongside one another or between a side wall (22) of the rack system (1, 1', 1") and an adjacent cabinet segment (6),
- the small articles (13) are deposited in the cabinet segments (6) and removed from the cabinet segments (6) by way of an article transporting apparatus (12), and
- the article transporting apparatus (12) is positioned in front of at least one of the cabinet segments (6) via a horizontal and vertical guide which is driven by an electric motor and has a shaft system, wherein the article transporting apparatus (12) is moved, independently of the cabinet segments (6) but nevertheless still freely in relation to the cabinet segments (6), freely in the Cartesian system of the rack system (1) by the horizontal and vertical guide, decoupled from the guide for the cabinet segments (6), in the movement direction (A) of the cabinet segments (6) such that it is located at the level of the gap (3), the article transporting apparatus (12) is then positioned in the gap (3) perpendicularly to the movement direction (A) of the cabinet segments (6), and the article transporting apparatus (12) is a charging and removal robot,
**characterized in that**
the horizontal and vertical guide is realized by the shaft system, which either
- has a vertical shaft (10), two horizontal shafts (9, 9') in the movement direction (A) of the cabinet segments (6) and a third horizontal shaft (11) transversely to the movement direction (A) of the cabinet segments (6), said third horizontal shaft (11) connecting together the two horizontal shafts (9, 9') extending in the movement direction (A) of the cabinet segments (6), wherein the vertical shaft (10) is connected in a movable manner to the third horizontal shaft (11), which is displaceable laterally by a motor, such that the vertical shaft (10) is movable to and fro along the third horizontal shaft (11) in the gap (3) with the article transporting apparatus (12) and can be moved into the gap (3) and out of the latter, and wherein the article transporting apparatus (12) can be moved upwardly out of the gap (3) along the vertical shaft (10) and is arrangeable above the cabinet segments (6) and movable away from the gap (3); or
- has a vertical shaft (10), two horizontal shafts (9, 9") in the movement direction (A) of the cabinet segments (6) and a third horizontal shaft (11) transversely to the movement direction (A) of the cabinet segments (6), wherein the vertical shaft (10) connects together the two horizontal shafts (9, 9") extending in the movement direction (A) of the cabinet segments (6), wherein the third horizontal shaft (11) can project laterally into the rack system (1') and is positionable in the gap (3) between the cabinet segments (6) with the article transporting apparatus (12), and wherein the article transporting apparatus (12) is displaceable along the third horizontal shaft (11) and is movable freely above the cabinet segments (6) by the horizontal and vertical guide having the shaft system; or
- has a first and a second vertical shaft (10, 10'), a first and a second horizontal shaft (9", 9"') in the movement direction (A) of the cabinet segments (6) and a third horizontal shaft (11) extending transversely to the movement direction (A) of the cabinet segments (6), said third horizontal shaft (11) connecting the first and second vertical shafts (10, 10') together, wherein the first vertical shaft (10) is guided by the first horizontal shaft (9") and the second vertical shaft (10') is guided by the second horizontal shaft (9"'), wherein the article transporting apparatus (12) is displaceable along the third horizontal shaft (11) and is movable freely along the guide track for the cabinet segments (6) and also transversely and vertically with respect to the guide track for the cabinet segments (6) by the horizontal and vertical guide having the shaft system,
- wherein the article transporting apparatus (12) executes pivoting and translatory movements and is pivotable through at least 180° about its own rotation axis (4) in order to deposit or remove small articles (13).

10. Method according to claim 9, **characterized in that** the cabinet segments (6) are moved along horizontal guide rails (2, 2').

11. Method according to claim 9 or 10, **characterized in that**, while removing the small article (13) from a storage compartment (7) of a cabinet segment (6), the article transporting apparatus (12) moves so far into the storage compartment (7) that the small article (13) to be removed butts against a rear wall (20) of the storage compartment (7), and **in that** the small article (13) is picked up by suction by a suction head (5) of the article transporting apparatus (12) and is removed from the storage compartment (7) without the small article (13) being gripped laterally by the article transporting apparatus (12).

12. Method according to one of claims 9 to 11, **characterized in that** the size and/or the position and/or identification data of the small articles (13) to be transported are sensed by sensors provided on the article transporting apparatus (12).

## Revendications

1. Système d'étagère (1, 1', 1") pour le stockage automatisé de petits objets (13), avec
- plusieurs segments d'armoire (6), dans lequel les segments d'armoire (6) sont disposés l'un à côté de l'autre le long d'un guidage pour les segments d'armoire (6) s'étendant dans une direction de déplacement (A) pour les segments d'armoire (6) et sont supportés en mouvement de va et vient indépendamment l'un de l'autre dans la direction de déplacement (A) au moyen du guidage, de telle manière qu'une fente (3) soit réglable au moins entre deux segments d'armoire (6) disposés l'un à côté de l'autre ou entre une partie latérale (22) du système d'étagère (1, 1', 1") et un segment d'armoire adjacent (6);
- un guidage horizontal et vertical entraîné par un moteur électrique, qui présente un système d'axes; et
- un dispositif de transport d'objets (12), avec lequel de petits objets (13) peuvent être déposés dans les segments d'armoire (6) et être repris hors des segments d'armoire (6), dans lequel le dispositif de transport d'objets (12) peut être positionné par le guidage horizontal et vertical devant au moins un des segments d'armoire (6), et dans lequel le dispositif de transport d'objets (12) est déplaçable librement dans le système cartésien du système d'étagère (1, 1', 1") par le guidage horizontal et vertical dans la direction de déplacement (A) des segments d'armoire (6) ainsi que dans deux autres directions de déplacement perpendiculaires à la direction de déplacement (A) des segments d'armoire (6), indépendamment des segments d'armoire (6) mais néanmoins toujours en relation avec les segments d'armoire (6), et peut ainsi être positionné dans la fente (3), dans lequel le guidage horizontal et vertical pour le dispositif de transport d'objets (12) et le guidage pour les segments d'armoire (6) peuvent être découplés l'un de l'autre, et dans lequel le dispositif de transport d'objets (12) est un robot de chargement et de reprise,
**caractérisé en ce que**
le dispositif de transport d'objets (12) présente un axe de rotation vertical (4) et le dispositif de transport d'objets (12) peut pivoter d'environ au moins 180° autour de son propre axe de rotation (4) et peut exécuter des mouvements de pivotement et de translation,
et **en ce que** soit
- le système d'axes présente un axe vertical (10), deux axes horizontaux (9, 9') dans la direction de déplacement (A) des segments d'armoire (6) et un troisième axe horizontal (11) transversal à la direction de déplacement (A) des segments d'armoire (6), qui relie l'un à l'autre les deux axes horizontaux (9, 9') s'étendant dans la direction de déplacement (A) des segments d'armoire (6), dans lequel l'axe vertical (10) est relié de façon mobile au troisième axe horizontal (11) déplaçable latéralement et de façon motorisée, de telle manière que l'axe vertical (10) soit déplaçable en va et vient dans la fente (3) avec le dispositif de transport d'objets (12) le long du troisième axe horizontal (11) et puisse être introduit dans la fente (3) et retiré hors de celle-ci, et dans lequel le dispositif de transport d'objets (12) est déplaçable vers le haut hors de la fente (3) le long de l'axe vertical (10) et peut être disposé au-dessus des segments d'armoire (6) et peut être écarté de la fente (3); soit
- le système d'axes présente un axe vertical (10), deux axes horizontaux (9, 9") dans la direction de déplacement (A) des segments d'armoire (6) et un troisième axe horizontal (11) transversal à la direction de déplacement (A) des segments d'armoire (6), dans lequel l'axe vertical (10) relie l'un à l'autre les deux axes horizontaux (9, 9") s'étendant dans la direction de déplacement (A) des segments d'armoire (6), dans lequel le troisième axe horizontal (11) peut s'engager latéralement dans le système d'étagère (1') et être positionné avec le dispositif de transport d'objets (12) dans la fente (3) entre les segments d'armoire (6) et dans lequel le dispositif de transport d'objets (12) est déplaçable le long du troisième axe horizontal (11) et est mobile librement au-dessus des segments d'armoire (6) au moyen du guidage horizontal et vertical présentant le système d'axes; soit
- le système d'axes présente un premier et un deuxième axes verticaux (10, 10'), un premier et un deuxième axes horizontaux (9", 9"') dans la direction de déplacement (A) des segments d'armoire (6) et un troisième axe horizontal (11) s'étendant transversalement à la direction de déplacement (A) des segments d'armoire (6), qui relie l'un à l'autre le premier et le deuxième axes verticaux (10, 10'), dans lequel la premier axe vertical (10) est guidé par le premier axe horizontal (9") et le deuxième axe vertical (10') est guidé par le deuxième axe horizontal (9"'), dans lequel le dispositif de transport d'objets (12) est déplacé le long du troisième axe horizontal (11) et peut être déplacé librement le long de la voie de guidage pour les segments d'armoire (6) par le guidage horizontal et vertical présentant le système d'axes comme aussi transversalement et verticalement par rapport à la voie de guidage pour les segments d'armoire (6).

2. Système d'étagère selon la revendication 1, **caractérisé en ce que** les segments d'armoire (6) sont guidés par des rails de guidage horizontaux (2, 2').

3. Système d'étagère selon l'une quelconque des revendications précédentes, **caractérisé en ce que** les segments d'armoire (6) présentent des casiers de stockage (7) avec une profondeur (t) déterminée par une paroi arrière de casier de stockage (20), et les casiers de stockage (7) sont conçus de façon à ne contenir qu'un seul petit objet (13).

4. Système d'étagère selon la revendication 3, **caractérisé en ce que** les casiers de stockage (7) sont formés par des fonds en aluminium agrafés.

5. Système d'étagère selon la revendication 3 ou 4, **caractérisé en ce que** les casiers de stockage (7) sont inclinés en pente descendante de l'avant vers l'arrière.

6. Système d'étagère selon l'une quelconque des revendications précédentes, **caractérisé en ce que** le dispositif de transport d'objets (12) présente une tête aspirante (5) déplaçable d'avant en arrière et pas d'éléments de prise latéraux.

7. Système d'étagère selon l'une quelconque des revendications précédentes, **caractérisé en ce qu'**il est prévu sur le dispositif de transport d'objets (12) des capteurs destinés à détecter la taille et/ou la position et/ou des données d'identification du petit objet à transporter (13).

8. Système d'étagère selon l'une quelconque des revendications précédentes, **caractérisé en ce que** les segments d'armoire (6) peuvent être extraits, indépendamment l'un de l'autre, horizontalement, perpendiculairement à la direction de déplacement (A) des segments d'armoire (6) définie par leur guidage.

9. Procédé pour le stockage automatisé de petits objets (13), avec un système d'étagère (1, 1', 1") comprenant plusieurs segments d'armoire (6), dans lequel
- on déplace au moins un des segments d'armoire (6) le long d'une direction de déplacement (A) au moyen d'un guidage, de telle manière qu'il apparaisse une fente (3) au moins entre deux segments d'armoire (6) disposés l'un à côté de l'autre ou entre une paroi latérale (22) du système d'étagère (1, 1', 1") et un segment d'armoire adjacent (6),
- on dépose le petit objet (13) avec un dispositif de transport d'objets (12) dans les segments d'armoire (6) et on le retire hors des segments d'armoire (6), et
- on positionne le dispositif de transport d'objets (12) devant au moins un des segments d'armoire (6) au moyen d'un guidage horizontal et vertical entraîné par un moteur électrique, qui présente un système d'axes,
dans lequel on déplace librement dans le système cartésien du système d'étagère (1) le dispositif de transport d'objets (12), indépendamment des segments d'armoire (6) mais néanmoins toujours en relation avec les segments d'armoire (6), dans la direction de déplacement (A) des segments d'armoire (6) au moyen du guidage horizontal et vertical découplé du guidage pour les segments d'armoire (6), de telle manière qu'il se trouve à hauteur de la fente (3), on positionne ensuite le dispositif de transport d'objets (12) dans la fente (3) perpendiculairement à la direction de déplacement (A) des segments d'armoire (6) et le dispositif de transport d'objets (12) est un robot de chargement et de reprise,
**caractérisé en ce que**
le guidage horizontal et vertical est réalisé par le système d'axes, qui soit
- présente un axe vertical (10), deux axes horizontaux (9, 9') dans la direction de déplacement (A) des segments d'armoire (6) et un troisième axe horizontal (11) transversal à la direction de déplacement (A) des segments d'armoire (6), qui relie l'un à l'autre les deux axes horizontaux (9, 9') s'étendant dans la direction de déplacement (A) des segments d'armoire (6), dans lequel l'axe vertical (10) est relié de façon mobile au troisième axe horizontal (11) déplaçable latéralement et de façon motorisée, de telle manière que l'axe vertical (10) soit déplaçable en va et vient dans la fente (3) avec le dispositif de transport d'objets (12) le long du troisième axe horizontal (11) et puisse être introduit dans la fente (3) et retiré hors de celle-ci, et dans lequel le dispositif de transport d'objets (12) est déplaçable vers le haut hors de la fente (3) le long de l'axe vertical (10) et peut être disposé au-dessus des segments d'armoire (6) et peut être écarté de la fente (3); soit
- présente un axe vertical (10), deux axes horizontaux (9, 9") dans la direction de déplacement (A) des segments d'armoire (6) et un troisième axe horizontal (11) transversal à la direction de déplacement (A) des segments d'armoire (6), dans lequel l'axe vertical (10) relie l'un à l'autre les deux axes horizontaux (9, 9") s'étendant dans la direction de déplacement (A) des segments d'armoire (6), dans lequel le troisième axe horizontal (11) peut s'engager latéralement dans le système d'étagère (1') et être positionné avec le dispositif de transport d'objets (12) dans la fente (3) entre les segments d'armoire (6) et dans lequel le dispositif de transport d'objets (12) est déplaçable le long du troisième axe horizontal (11) et est mobile librement au-dessus des segments d'armoire (6) au moyen du guidage horizontal et vertical présentant le système d'axes; soit
- présente un premier et un deuxième axes verticaux (10, 10'), un premier et un deuxième axes horizontaux (9", 9"') dans la direction de déplacement (A) des segments d'armoire (6) et un troisième axe horizontal (11) s'étendant transversalement à la direction de déplacement (A) des segments d'armoire (6), qui relie l'un à l'autre le premier et le deuxième axes verticaux (10, 10'), dans lequel la premier axe vertical (10) est guidé par le premier axe horizontal (9") et le deuxième axe vertical (10') est guidé par le deuxième axe horizontal (9"'), dans lequel le dispositif de transport d'objets (12) est déplacé le long du troisième axe horizontal (11) et peut être déplacé librement le long de la voie de guidage pour les segments d'armoire (6) par le guidage horizontal et vertical présentant le système d'axes comme aussi transversalement et verticalement par rapport à la voie de guidage pour les segments d'armoire (6),
- dans lequel le dispositif de transport d'objets (12) exécute des mouvements de pivotement et de translation et peut pivoter d'au moins 180° autour de son propre axe de rotation (4) pour déposer et reprendre de petits objets (13).

10. Procédé selon la revendication 9, **caractérisé en ce que** l'on déplace les segments d'armoire (6) le long de rails de guidage horizontaux (2, 2').

11. Procédé selon la revendication 9 ou 10, **caractérisé en ce que**, lors de la reprise d'un petit objet (13) hors d'un casier de stockage (7) d'un segment d'armoire (6), on introduit le dispositif de transport d'objets (12) à un tel point dans le casier de stockage (7), que le petit objet à reprendre (13) bute contre une paroi arrière (20) du casier de stockage (7), et que le petit objet (13) soit aspiré par une tête aspirante (5) du dispositif de transport d'objets (12) et soit extrait hors du casier de stockage (7), sans que le petit objet (13) soit saisi latéralement par le dispositif de transport d'objets (12).

12. Procédé selon l'une quelconque des revendications 9 à 11, **caractérisé en ce que** l'on détecte la taille et/ou la position et/ou des données d'identification du petit objet à transporter (13) avec des capteurs prévus sur le dispositif de transport d'objets (12).
